(19) Europäisches Patentamt
European Patent Office
Office européen des brevets

(11) **EP 4 756 494 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
*G01S 17/10* (2020.01)

(21) Application number: **24915885.8**

(52) Cooperative Patent Classification (CPC):
**G01S 17/10**

(22) Date of filing: **08.01.2024**

(86) International application number:
**PCT/CN2024/071092**

(87) International publication number:
**WO 2025/147802 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Honor Device Co., Ltd.
Shenzhen, Guangdong 518040 (CN)**

(72) Inventors:
• **CHANG, Zhongcan
Shenzhen, Guangdong 518040 (CN)**
• **WU, Runhao
Shenzhen, Guangdong 518040 (CN)**
• **WANG, Ruoqiu
Shenzhen, Guangdong 518040 (CN)**
• **FENG, Xiaogang
Shenzhen, Guangdong 518040 (CN)**

(74) Representative: **Gill Jennings & Every LLP
The Broadgate Tower
20 Primrose Street
London EC2A 2ES (GB)**

(54) **METHOD FOR DETERMINING DEPTH VALUE, DEVICE, CHIP SYSTEM, AND STORAGE MEDIUM**

(57) This application provides a depth value determining method, a device, a chip system, and a storage medium, and relates to the field of terminal technologies. In a depth information measurement scenario, it is first determined, based on a histogram obtained by using a depth detection module, whether a measured object is at a relatively short distance; when the measured object is at the relatively long distance, an envelope location of a crosstalk signal and an envelope location of a target signal in the histogram are relatively far apart on a horizontal axis, and a depth value is obtained in a double-peak subtraction manner; and when the measured object is at a relatively short distance, peaks of the two signals cannot be clearly distinguished, a preset reference signal is considered as a crosstalk signal actually detected within current detection duration, the target signal is restored from the histogram based on the preset reference signal, and then the depth value is obtained based on received time of the preset reference signal and received time of the target signal. A crosstalk signal returned by a glass cover plate is used as a reference signal and zero-distance point calibration is performed, to reduce interference of the crosstalk signal to the target signal returned from the measured object, and improve accuracy of depth information.

FIG. 16

## Description

### TECHNICAL FIELD

This application relates to the field of terminal technologies, and in particular, to a depth value determining method and device, a chip system, and a storage medium.

### BACKGROUND

Currently, depth detection modules based on time of flight (time of flight, ToF) algorithms are more frequently used in electronic devices such as mobile phones. For example, in a scenario of capturing a picture or a video, an electronic device may use depth information provided by a depth detection module to assist in focusing, to achieve a large aperture blur effect. In some cases, depth information provided by the depth detection module may be inaccurate, affecting an auxiliary focus effect.

### SUMMARY

This application provides a depth value determining method, a device, a chip system, and a storage medium, to resolve a technical problem that a depth value measured by a depth detection module is inaccurate.

To achieve the foregoing objective, the following technical solutions are used in this application:
According to a first aspect, an embodiment of this application provides a depth value determining method. The method may be applied to an electronic device. A depth detection module is arranged below a cover plate of the electronic device, and the depth detection module includes a transmit end and a receive end. The method may include: The electronic device receives a pulse signal through the receive end, where the pulse signal includes a first crosstalk signal and a target signal, the first crosstalk signal is a signal that is transmitted by the transmit end and reflected back by the cover plate, and the target signal is a signal that is transmitted by the transmit end and reflected back by a measured object; and then the electronic device determines a depth value of the measured object based on received time of a second crosstalk signal and received time of the target signal. The second crosstalk signal is the first crosstalk signal, or the second crosstalk signal is a preset crosstalk signal. The depth value of the measured object represents a distance between the electronic device and the measured object.

In the solution, a distance between the depth detection module and the cover plate is less than a distance between the depth detection module and the measured object, so that time at which the depth detection module receives a crosstalk signal reflected by the cover plate is earlier than time at which the depth detection module receives a target signal reflected by the measured object. If the crosstalk signal is superimposed on the target signal, the crosstalk signal interferes with the target signal. Based on a feature that received time of the crosstalk signal is earlier, the electronic device may separate the target signal from the pulse signal, and calibrate time of flight of the target signal by using the received time of the crosstalk signal as a zero-distance point, so that the depth value calculated according to calibrated time of flight is more accurate.

In a possible implementation, the depth detection module may be a ToF module.

In a possible implementation, the cover plate may be a glass cover plate.

In a possible implementation, before the electronic device determines the depth value of the measured object based on the received time of the second crosstalk signal and the received time of the target signal, the method further includes: The electronic device separates the target signal from the pulse signal based on the second crosstalk signal.

For example, the electronic device may generate a first histogram based on the pulse signal, where a horizontal axis of the first histogram represents received time of the pulse signal, and a vertical axis of the first histogram represents a signal strength of the pulse signal. If a peak meeting a preset condition is found within a preset peak finding range of the first histogram, the electronic device separates the target signal from the first histogram based on the preset crosstalk signal. Alternatively, if a peak meeting a preset condition is not found within a preset peak finding range of the first histogram, the electronic device separately determines the first crosstalk signal and the target signal in the first histogram, where received time of the first crosstalk signal is earlier than the received time of the target signal. The preset peak finding range is determined according to a peak location of the preset crosstalk signal. It may be understood that, when an environment parameter of the electronic device remains unchanged, the electronic device may directly determine a peak finding range of a first pixel based on the preset crosstalk signal, and then find a peak meeting the preset condition in a histogram obtained through statistics collection by using a histogram statistics collection module.

For another example, the electronic device may generate a first histogram based on the pulse signal, where a horizontal axis of the first histogram represents received time of the pulse signal, and a vertical axis of the first histogram represents a signal strength of the pulse signal. The electronic device adjusts the received time of the pulse signal in the first histogram (for example, shifts a signal envelope of the pulse signal by a target adjustment amount in a first direction of the horizontal axis) based on an ambient temperature of the electronic device and a voltage of the depth detection module, to obtain a second histogram. If a peak meeting a preset condition is found within a preset peak finding range of the second histogram, the electronic device separates the target signal from the second histogram based on the preset crosstalk signal. Alternatively, if a peak meeting a preset condition is not found within a preset peak finding range of the second histogram, the electronic device separately determines the first crosstalk signal and the target signal in the first histogram, where received time of the first crosstalk signal is earlier than the received time of the target signal. The preset peak finding range is determined according to a peak location of the preset crosstalk signal. It may be understood that when a preset reference signal remains unchanged, a crosstalk signal and a target signal in an original histogram are shifted along a horizontal axis, thereby improving accuracy of the target signal restored from the histogram based on the preset reference signal in a short-distance ranging scenario, and further improving accuracy of a finally calculated depth value.

For another example, the electronic device may generate a first histogram based on the pulse signal, where a horizontal axis of the first histogram represents received time of the pulse signal, and a vertical axis of the first histogram represents a signal strength of the pulse signal. The electronic device adjusts received time of the preset crosstalk signal (for example, shifts a signal envelope of the preset crosstalk signal by a target adjustment amount in a second direction of the horizontal axis, where a first direction is opposite to the second direction) based on an ambient temperature of the electronic device and a voltage of the depth detection module. If a peak meeting a preset condition is found within a preset peak finding range of the first histogram, the electronic device separates the target signal from the first histogram based on the adjusted preset crosstalk signal. Alternatively, if a peak meeting a preset condition is not found within a preset peak finding range of the first histogram, the electronic device separately determines the first crosstalk signal and the target signal in the first histogram, where received time of the first crosstalk signal is earlier than the received time of the target signal. The preset peak finding range is determined according to a peak location of the adjusted preset crosstalk signal. It may be understood that when a location of a signal envelope on a horizontal axis in an original histogram remains unchanged, a preset reference signal is shifted along the horizontal axis, thereby improving accuracy of a target signal restored from the histogram based on the preset reference signal in a short-distance ranging scenario, and further improving accuracy of a finally calculated depth value.

It should be noted that, the "voltage of the depth detection module" is a supply voltage of a power supply module of the electronic device to the depth detection module.

In a possible implementation, the preset condition may include a first condition and a second condition.

(1) The first condition is that a signal strength of a found peak is greater than a strength of background noise.

The background noise may include ambient light noise, device dark noise caused by a circuit, noise caused by a stain on the glass cover plate, and the like. An example in which the background noise is the stain stuck on the glass cover plate is used. If a strength of a background noise signal caused by the stain on the glass cover plate is relatively high, and a target signal is seriously attenuated, the electronic device may incorrectly determine the background noise signal as the target signal based on a confidence algorithm. To avoid this case, the electronic device may eliminate interference by determining whether a signal strength of a found peak is greater than the strength of the background noise. For example, the electronic device may detect a strength of the background noise in real time, and then determine whether a signal strength of a found peak is greater than the strength of the background noise. If the signal strength of the peak is greater than the strength of the background noise, it indicates that the peak is not a peak of the background noise. If the signal strength of the peak is less than or equal to the strength of the background noise, it indicates that the peak may be the peak of the background noise.

(2) The second condition is that the signal strength of the found peak is greater than N times a signal strength of a preset reference signal.

N is greater than or equal to 2. For example, N=3.

The signal strength may be a light intensity, or may be a quantity of photons obtained through counting within detection duration.

When the ambient temperature of the electronic device and the voltage of the depth detection module remain unchanged, a strength of the pulse signal transmitted by the depth detection module is fixed, and relative locations of the glass cover plate and the depth detection module are also fixed. Therefore, strength distribution and a peak location of a crosstalk signal actually measured by the electronic device also remain unchanged. However, when a distance between the electronic device and the measured object is changed, a strength of the target signal reflected back by the measured object changes. For example, when the distance between the electronic device and the measured object is relatively short, most of light emitted by the depth detection module penetrates through glass and illuminates the measured object, and the strength of the target signal reflected back by the measured object is N times that of a crosstalk signal reflected back by the glass cover plate. As the distance between the electronic device and the measured object gradually increases, the strength of the target signal is gradually attenuated. Based on a feature that the strength of the target signal is attenuated with a propagation distance, after finding a peak, the electronic device may determine whether a signal strength of the peak is greater than N times that of the preset reference signal. If the signal strength of the peak is greater than N times the strength of the preset reference signal, it indicates that an attenuation degree of the target signal is relatively low, and a current scenario may be short-distance ranging. If the signal strength of the peak is less than or equal to N times the strength of the preset reference signal, it indicates that an attenuation degree of the target signal is relatively high, and a current scenario may be long-distance ranging.

In a possible implementation, before the electronic device adjusts the received time of the pulse signal in the first histogram, or before the electronic device adjusts the received time of the preset crosstalk signal, the method may further include: The electronic device obtains an ambient temperature of the electronic device and a voltage of the depth detection module; obtains a first time adjustment amount based on the ambient temperature of the electronic device and a temperature compensation model; obtains a second time adjustment amount based on the voltage of the depth detection module and a voltage compensation model; and uses a sum of the first time adjustment amount and the second time adjustment amount as the target adjustment amount. The temperature compensation model is generated according to a plurality of first depth values, and the plurality of first depth values are depth values obtained by changing the ambient temperature under a preset voltage; and the voltage compensation model is generated according to a plurality of second depth values, and the plurality of second depth values are depth values obtained by changing the voltage of the depth detection module at a preset temperature.

For example, an equation of the temperature compensation model is as follows:

$$\text{thermal}_{\text{offset}} = a * \left(\text{temperature} - \text{init}_{\text{temp}}\right)^2 + b * \left(\text{temperature} - \text{init}_{\text{temp}}\right).$$

$\text{thermal}_{\text{offset}}$ represents a depth value adjustment amount. a represents a slope of a first fitted line. b represents a slope of a second fitted line. temperature represents an ambient temperature of the electronic device during current detection. $\text{init}_{\text{temp}}$ represents a reference temperature, and the reference temperature is an ambient temperature of the electronic device during data calibration. For example, $\text{init}_{\text{temp}} = 25°C$.

For example, an equation of the voltage compensation model is as follows:

$$\begin{aligned}\text{Vspad}_{\text{offset}} &= \text{Vspad}_{\text{delta}} * \text{ratio}_{\text{tof}} * 1000 \\ &= \left(\left|\text{Vspad}_{\text{meas}}\right| - V_{\text{calc}}\right) * \text{ratio}_{\text{tof}} * 1000 \\ &= \left(\left|\text{Vspad}_{\text{meas}}\right| - \left(\left|\text{Vspad1}\right| + \left(\text{bvd}_{\text{current}} - \text{bvd1}\right) * \text{bvd}_{\text{lsb}}\right)\right) * \text{ratio}_{\text{tof}} * 1000\end{aligned}.$$

$\text{Vspad}_{\text{offset}}$ represents a depth value adjustment amount. $\text{Vspad}_{\text{delta}}$ represents a difference between a voltage value of the depth detection module during current detection and a voltage value recorded during data calibration. $\text{Vspad}_{\text{meas}}$ represents a voltage of the depth detection module during current detection with a unit of mv. Vspad1 represents the voltage value recorded during data calibration with a unit of mv. $\text{bvd}_{\text{current}}$ represents a level during current detection. bvd1 represents a level recorded during data calibration. $\text{bvd}_{\text{lsb}}$ represents a voltage value changed when a single level is switched with a unit of mv. $\text{ratio}_{\text{tof}}$ represents a slope of a voltage fitted line.

In a possible implementation, the method may further include: The electronic device stores a group of data when a signal strength of a found peak does not meet the preset condition, where the group of data may include: the ambient temperature of the electronic device, the voltage of the depth detection module, and a signal parameter of the first crosstalk signal; and the electronic device updates the temperature compensation model or the voltage compensation model when a plurality of groups of data stored in the electronic device meet an update condition.

In the solution, because the temperature compensation model and the voltage compensation model are preconfigured before the electronic device is delivered from a factory. Because the temperature compensation model and the voltage compensation model are generated based on a small quantity of depth detection modules, the temperature compensation model and the voltage compensation model can reflect only some common features between the depth detection modules. Based on an individual difference between the depth detection modules, there may be an error in a depth compensation value calculated according to the temperature compensation model and the voltage compensation model. Based on a feature that in a long-distance ranging scenario, an envelope location of a crosstalk signal and an envelope location of a target signal are far apart on a horizontal axis, and peaks of the two signals can be distinguished, the electronic device may separate the crosstalk signal from a histogram in the long-distance ranging scenario in an entire use process, and continuously optimize the temperature compensation model and the voltage compensation model based on the crosstalk signal, and an ambient temperature and a voltage that correspond to the crosstalk signal, so that a depth adjustment value obtained according to the temperature compensation model and the voltage compensation model is more accurate.

In a possible implementation, if the second crosstalk signal is the first crosstalk signal, that the electronic device determines the depth value of the measured object based on the received time of the second crosstalk signal and the received time of the target signal may include: The electronic device subtracts received time of the first crosstalk signal from the received time of the target signal, to obtain first time of flight; and determines the depth value of the measured object based on the first time of flight. It may be understood that, when the measured object is within a long-distance ranging range, an envelope location of a crosstalk signal and an envelope location of a target signal are far apart on a horizontal axis, and peaks of the two signals can be distinguished. Therefore, a depth value may be obtained in a double-peak subtraction manner.

In a possible implementation, if the second crosstalk signal is the preset crosstalk signal, that the electronic device determines the depth value of the measured object based on the received time of the second crosstalk signal and the received time of the target signal may include: The electronic device subtracts the received time of the preset crosstalk signal from the received time of the target signal, to obtain second time of flight; and determines the depth value of the measured object based on the second time of flight. It may be understood that, when the measured object is within a short-distance ranging range, peaks of two signals cannot be clearly distinguished from each other. A CPU may consider a preset reference signal as a crosstalk signal actually detected within current detection duration, restore a target signal from a histogram based on the preset reference signal, and then obtain a depth value based on received time of the preset reference signal and received time of the target signal.

In a possible implementation, the receive end may include a plurality of pixels. Correspondingly, that the electronic device determines the depth value of the measured object based on the received time of the second crosstalk signal and the received time of the target signal may include: The electronic device determines the received time of the preset reference signal corresponding to a first pixel and the received time of the target signal corresponding to the first pixel, where the first pixel is any one of the plurality of pixels; and the electronic device determines a depth value corresponding to the first pixel based on the received time of the preset reference signal corresponding to the first pixel and the received time of the target signal corresponding to the first pixel.

In a possible implementation, that the electronic device determines the received time of the preset reference signal corresponding to the first pixel may include: The electronic device determines the received time of the preset reference signal corresponding to the first pixel based on an envelope shape of a crosstalk signal of one pixel, strength distribution of the preset crosstalk signal corresponding to the first pixel, and an envelope location of the preset crosstalk signal corresponding to the first pixel. The envelope shape of the crosstalk signal of the pixel, the strength distribution of the preset crosstalk signal corresponding to the first pixel, and the envelope location of the preset crosstalk signal corresponding to the first pixel are data prestored in the electronic device. It may be understood that because an envelope location of a crosstalk signal of each pixel in calibration data is different, a peak location of a preset reference signal corresponding to each pixel in a depth map is different, and a peak finding range corresponding to each pixel in the depth map is also different.

According to a second aspect, this application provides an electronic device. The electronic device includes a cover plate, and a depth detection module arranged below the cover plate. The depth detection module includes a transmit end and a receive end. The transmit end is configured to transmit a pulse signal. The receive end is configured to receive the pulse signal reflected back by a measured object and the cover plate. A processor is configured to invoke instructions, to enable the electronic device to perform the depth value determining method according to any one of the first aspect and the possible implementations. The processor is a main processor connected to the depth detection module in the electronic device, or the processor is a digital signal processor in the depth detection module.

In a possible implementation, the transmit end may include a pulse laser and a light scattering element, the pulse laser is configured to transmit the pulse signal, and the light scattering element is configured to perform scattering processing on the pulse signal.

In a possible implementation, the receive end may include a light detection element, a pulse response filter, and an optical receiver, the light detection element is configured to converge received light, the pulse response filter is configured to filter converged light, and the optical receiver is configured to convert filtered light into the pulse signal.

In a possible implementation, the optical receiver is a planar matrix device including a plurality of single-photo avalanche diode sensors.

In a possible implementation, a subtended angle at which the transmit end emits a light beam is 70°, a subtended angle at which the receive end receives a light beam is 70°. A thickness of the depth detection module in an optical axis direction is 2.48 mm, a distance between an upper surface of the depth detection module and a lower surface of the glass cover plate is 0.8 mm, and a distance between a geometric center of the transmit end and a geometric center of the receive end is 4 mm.

In the solution, the transmit end and the receive end use planar matrix devices, which are simpler in a hardware design, have relatively low costs, and can cover various locations of the measured object. In addition, based on the parameters, a main path of a crosstalk signal can be reflected in the glass cover plate once. It may be understood that a distance between the geometric center of the transmit end and the geometric center of the receive end is minimized as much as possible, so that a multipath reflection effect of the crosstalk signal can be reduced.

According to a third aspect, this application provides a computer-readable storage medium. The computer-readable storage medium includes computer instructions. When the computer instructions are run on an electronic device, the electronic device is enabled to perform the depth value determining method according to any one of the first aspect and the possible implementations of the first aspect.

According to a fourth aspect, this application provides a computer program product. When the computer program product runs on a computer, the computer is enabled to perform the depth value determining method according to any one of the first aspect and the possible implementations of the first aspect.

According to a fifth aspect, this application provides a chip system. The chip system is used in an electronic device. The chip system includes one or more processors, and the one or more processors are configured to invoke computer instructions, to enable the electronic device to perform the method according to any one of the first aspect and the possible implementations of the first aspect.

It may be understood that, for beneficial effects that can be achieved by the electronic device described in the second aspect, the computer-readable storage medium described in the third aspect, the computer program product described in the fourth aspect, and the chip system described in the fifth aspect provided above, refer to the beneficial effects in the first aspect and any possible implementation of the first aspect. Details are not described herein again.

## BRIEF DESCRIPTION OF DRAWINGS

FIG. 1 is a schematic diagram of performing ranging through a ToF module according to an embodiment of this application;

FIG. 2 is another schematic diagram of performing ranging through a ToF module according to an embodiment of this application;

FIG. 3 is a schematic diagram of a depth information array map obtained through a ToF module according to an embodiment of this application;

FIG. 4A to FIG. 4D are a schematic diagram of a scenario in which an image is captured based on an uncalibrated depth value according to an embodiment of this application;

FIG. 5A to FIG. 5F are a schematic diagram of a scenario in which an image is captured based on a calibrated depth value according to an embodiment of this application;

FIG. 6 is a schematic diagram of a hardware structure of a mobile phone according to an embodiment of this application;

FIG. 7 is a schematic diagram of a hardware structure of another mobile phone according to an embodiment of this application;

FIG. 8 is a schematic diagram of a hardware structure of a ToF module according to an embodiment of this application;

FIG. 9 is a schematic diagram of a hardware structure of another ToF module according to an embodiment of this application;

FIG. 10 is a schematic structural diagram of a receive end planar array device according to an embodiment of this application;

FIG. 11 is a schematic diagram of performing ranging based on a surface light source and a receive end planar array device according to an embodiment of this application;

FIG. 12 is a schematic diagram of an operating principle of a ToF module based on a dToF method according to an embodiment of this application;

FIG. 13 is a schematic diagram in which a transmit end emits a pulse wave and a receive end receives the pulse wave according to an embodiment of this application;

FIG. 14 is a schematic diagram of an operating principle of a single SPAD sensor according to an embodiment of this application;

FIG. 15 is a schematic diagram of a principle of TCSPC according to an embodiment of this application;

FIG. 16 is a schematic diagram of a histogram obtained through a ToF module according to an embodiment of this application;

FIG. 17 is a schematic diagram of a histogram during long-distance ranging and a histogram during short-distance ranging according to an embodiment of this application;

FIG. 18 is a schematic flowchart of a depth value determining method according to an embodiment of this application;

FIG. 19 is a schematic diagram of finding a peak in a histogram according to an embodiment of this application;

FIG. 20 is a schematic diagram of a strength of background noise according to an embodiment of this application;

FIG. 21 is a schematic diagram of histograms at different temperatures according to an embodiment of this application;

FIG. 22 is a schematic diagram of performing ranging based on a crosstalk signal and a target signal in a long-distance ranging scenario according to an embodiment of this application;

FIG. 23 is a schematic diagram of a three-point method according to an embodiment of this application;

FIG. 24 is a schematic diagram of performing ranging in a short-distance ranging scenario according to an embodiment of this application;

FIG. 25 is another schematic diagram of performing ranging in a short-distance ranging scenario according to an embodiment of this application;

FIG. 26 is another schematic diagram of performing ranging in a short-distance ranging scenario according to an embodiment of this application;

FIG. 27 is a schematic diagram of a temperature drift curve according to an embodiment of this application;

FIG. 28 is a schematic diagram of a voltage curve according to an embodiment of this application;

FIG. 29 is a flowchart of a method for optimizing a temperature compensation model and a voltage compensation model according to an embodiment of this application;

FIG. 30 is a schematic diagram of two depth values under different voltages according to an embodiment of this application; and

FIG. 31 is a schematic structural diagram of an electronic device according to an embodiment of this application.

## DESCRIPTION OF EMBODIMENTS

To make the objectives, technical solutions, and advantages of embodiments of this application more comprehensible, the following clearly and completely describes the technical solutions in the embodiments of this application with reference to the accompanying drawings in the embodiments of this application. Apparently, the described embodiments are a part rather than all of the embodiments of this application.

A time of flight method in this application is first described.

A time of flight (time of flight, ToF) method is a bidirectional ranging technology, and mainly measures a distance between nodes by using round-trip time of a pulse signal between a transmit end and a receive end.

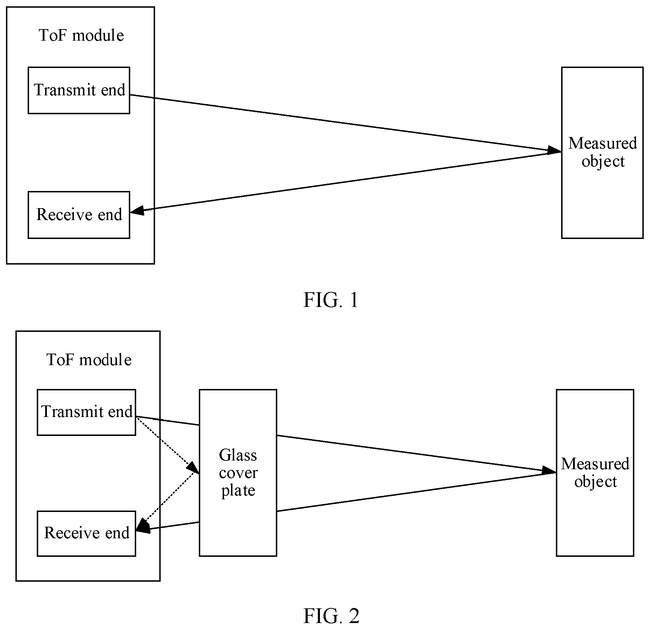

For example, FIG. 1 is a schematic diagram of performing ranging through a ToF module. As shown in FIG. 1, the ToF module includes a transmit end and a receive end. The transmit end of the ToF module transmits a pulse signal. The pulse signal is an electromagnetic wave of a particular wavelength. The pulse signal reaches a measured object, and returns back along a medium after being reflected by the measured object. The receive end of the ToF module receives the pulse signal. Then, the ToF module may estimate a distance between the ToF module and the measured object by using an equation (1) based on time from a moment at which the pulse signal is transmitted to a moment at which the pulse signal is received. The distance between the ToF module and the measured object is also referred to as a depth value.

$$D=c*\Delta t/2 \qquad\qquad (1)$$

D represents the distance between the ToF module and the measured object, c represents a light speed, and $\Delta t$ represents time from a moment at which the transmit end transmits the pulse signal to a moment at which the receive end receives the pulse signal.

Compared with a depth map captured by a binocular camera, a pixel in a depth map captured by the ToF module is relatively low, and a distance between two nodes can be calculated with relatively low computing power and power consumption. Therefore, the ToF module is more frequently used in an electronic device such as a mobile phone. In a scenario example, in a scenario of capturing a picture or a video, an electronic device may use a depth value provided by the ToF module to assist in focusing, to achieve a large aperture blur effect. In another scenario, the electronic device may apply the depth value provided by the ToF module to a virtual reality (virtual reality, VR) scenario and an augmented reality (augmented reality, AR) scenario.

Typically, a glass cover plate is arranged above the ToF module. Light emitted by the ToF module and light reflected by the measured object may penetrate the glass cover plate. According to a refraction law, a relationship between an incident angle and a refraction angle is: n1*sin(θ1)=n1*sin(θ2). n1 represents a refractive index of air, n2 represents a refractive index of glass, θ1 represents the incident angle, and θ2 represents the refraction angle. The refractive index of glass is greater than the refractive index of air. When light passes from an air medium into a glass medium, the light is refracted. When light passes from the glass medium into the air medium, the light is reflected, and an incident angle of the reflected light is equal to that of the incident light.

For example, FIG. 2 is another schematic diagram of performing ranging through a ToF module. As shown in FIG. 2, a glass cover plate is arranged between a ToF module and a measured object. When depth information is measured, most of light emitted by the ToF module passes through the glass cover plate to reach the measured object and is then reflected back. With reference to the descriptions in the foregoing paragraph, in a scenario of measuring the depth information, due to different refractive indexes of air and glass, light emitted by the ToF module is divided into two paths. In a first path, a part of the light emitted by a transmit end of the ToF module passes through the glass cover plate to reach the measured object, is then reflected by the measured object and passes through the glass cover plate, and is then reflected back, so that a receive end of the ToF module receives a target signal. In a second path, after reaching the glass cover plate, the other part of the light emitted by the transmit end of the ToF module is directly reflected back, so that the receive end of the ToF module receives a crosstalk (crosstalk) signal. Due to impact of the crosstalk signal, the depth information actually measured by the ToF module based on the target signal may have a deviation. For example, in a short-distance ranging scenario, because the measured object is relatively close to the ToF module, time at which the ToF module receives the crosstalk signal is very close to time at the ToF module receives the target signal, and the ToF module cannot distinguish the target signal and the crosstalk signal. As a result, a depth value calculated according to time of flight is inaccurate.

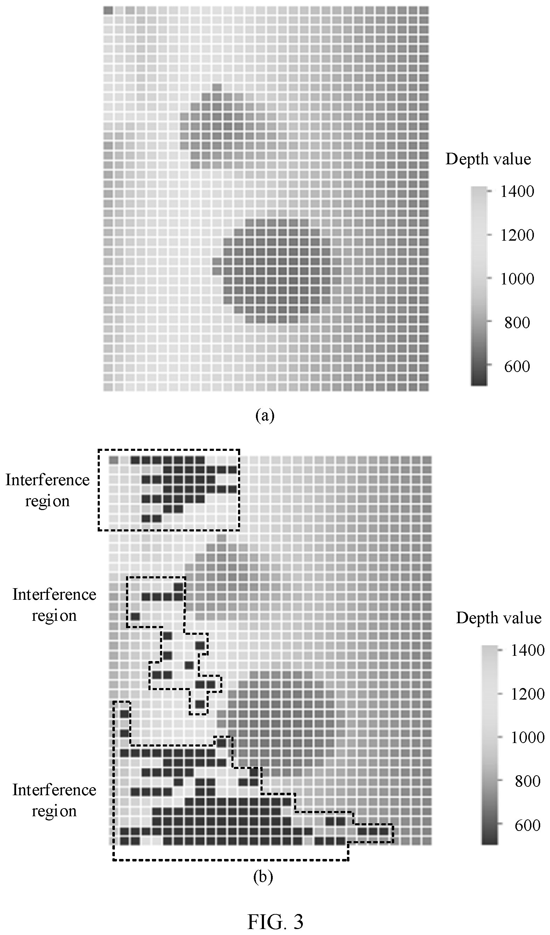

For example, FIG. 3 shows two depth information array maps obtained through a ToF module. Each depth information array map is formed by m*n pixels. A larger depth value of a pixel indicates a longer distance between a measured object and a ToF module. As shown in (a) in FIG. 3, when no glass cover plate is arranged between the ToF module and the measured object, the ToF module is not affected by a crosstalk signal, and a depth value of each pixel is relatively accurate. As shown in (b) in FIG. 3, when a glass cover plate is arranged between the ToF module and the measured object, the glass cover plate reflects light. Due to impact of factors such as an angle of the reflected light and a location of the ToF module, strengths of crosstalk signals in some regions in the depth information array map are relatively strong. After an electronic device superimposes a target signal and a crosstalk signal in an interference region, a calculated depth value is less than a true value.

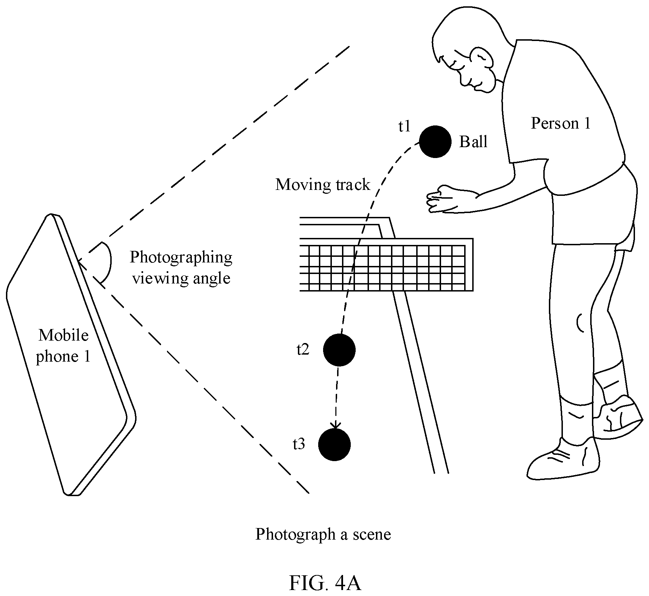

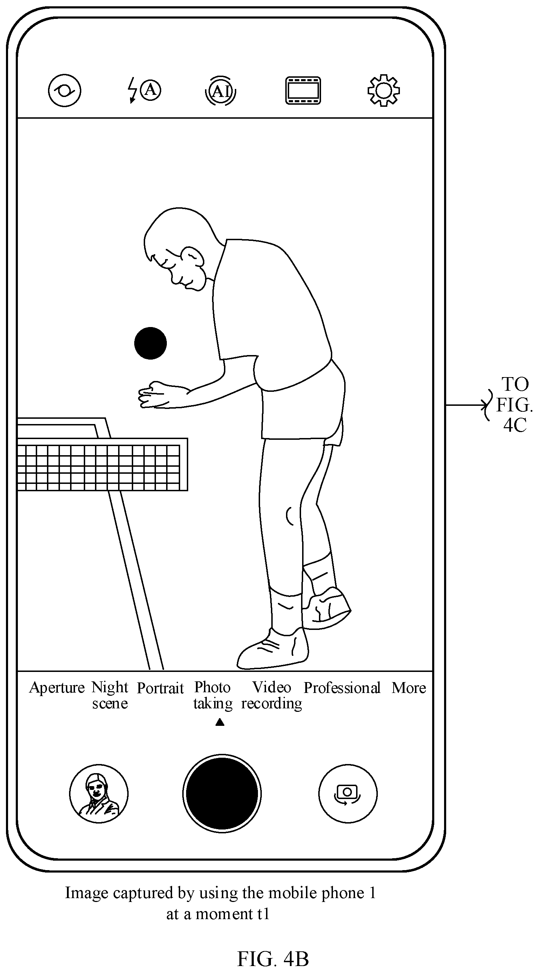

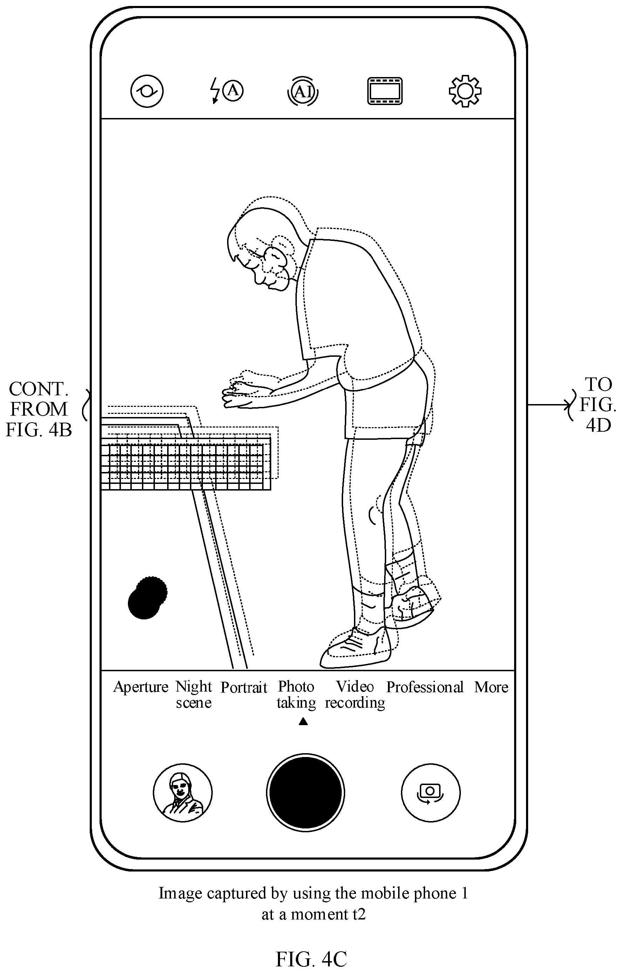

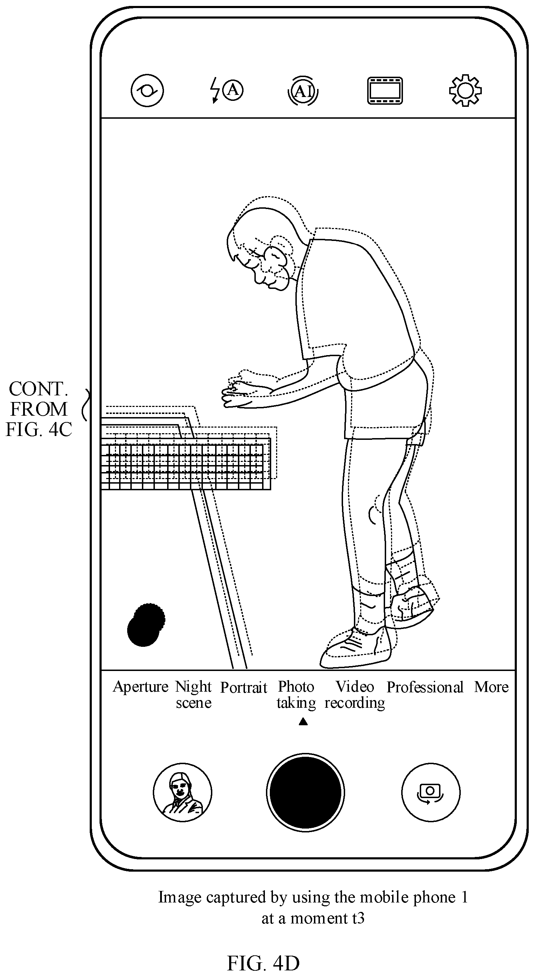

In a scenario example, when the depth value of the interference region in the depth information array map is inaccurate, an incorrect depth value affects focus tracking on a moving object. As shown in FIG. 4A, a user makes a camera of a mobile phone 1 face toward a person 1 that is serving a ball. In response to the operation of the user, the mobile phone 1 starts focus tracking on the ball based on a depth value collected by the ToF module. The ball rapidly flies along a moving track shown in FIG. 4A. At a moment t1, if the ball does not enter the interference region shown in (b) in FIG. 3, a depth value collected by the ToF module is relatively accurate, the mobile phone 1 succeeds in focus tracking on the ball, and a clear image shown in FIG. 4B is captured. At a moment t2, if the ball has entered the interference region shown in (b) in FIG. 3, a depth value collected by the ToF module has a deviation, focus tracking performed by the mobile phone 1 on the ball fails, and a blurry image shown in FIG. 4C is captured. At a moment t3, if the ball is still in the interference region shown in (b) in FIG. 3, a depth value collected by the ToF module is still inaccurate, focus tracking performed by the mobile phone 1 on the ball fails, and a blurry image shown in FIG. 4D is captured.

In view of the problem that a depth value measured by the ToF module is inaccurate due to impact of light reflected by the glass cover plate, this application provides a depth value determining method. The method may be applied to an electronic device. A ToF module is arranged below a glass cover plate of the electronic device. In a scenario of measuring depth information through the ToF module, the electronic device may perform zero-distance point calibration by using a crosstalk signal returned by the glass cover plate as a reference signal, to reduce interference of the crosstalk signal to a target signal returned from a measured object and improve accuracy of the depth information measured through the ToF module.

It should be noted that, in a conventional sense, a zero-distance point is time at which the ToF module transmits a pulse signal. In this application, the zero-distance point is time at which a crosstalk signal returned by the glass cover plate is received. For a specific implementation in which the crosstalk signal returned by the glass cover plate is used as a reference signal for zero-distance point calibration, refer to descriptions in the following embodiments.

In addition, the embodiments of this application are described by using an example in which the ToF module is arranged below the glass cover plate, and light emitted by the ToF module penetrates the glass cover plate. This application is not limited thereto. During actual implementation, the glass cover plate may alternatively be replaced with another cover plate having a light transmission and protection function, and the ToF module may be replaced with another depth detection module.

The electronic device may be a mobile phone (mobile phone), a personal computer (personal computer, PC), a smart screen, a smart television, a tablet computer (Pad), a wearable device, a computer with a wireless transceiver function, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or another device or apparatus in which a ToF module is disposed.

In some embodiments, the ToF module may be arranged on a back surface of the electronic device, and is used in scenarios such as person image shooting, video shooting, AR modeling, and a somatosensory game. When a user aligns the back surface of the electronic device with a measured object, the ToF module may measure a depth value from the electronic device to the measured object. In some other embodiments, the ToF module may be arranged on a front surface of the electronic device, and is used in scenarios such as face recognition and financial payment. When the user faces a display screen, an optical signal transmitted by the ToF module may be projected on a face of the user, to obtain depth information of the face.

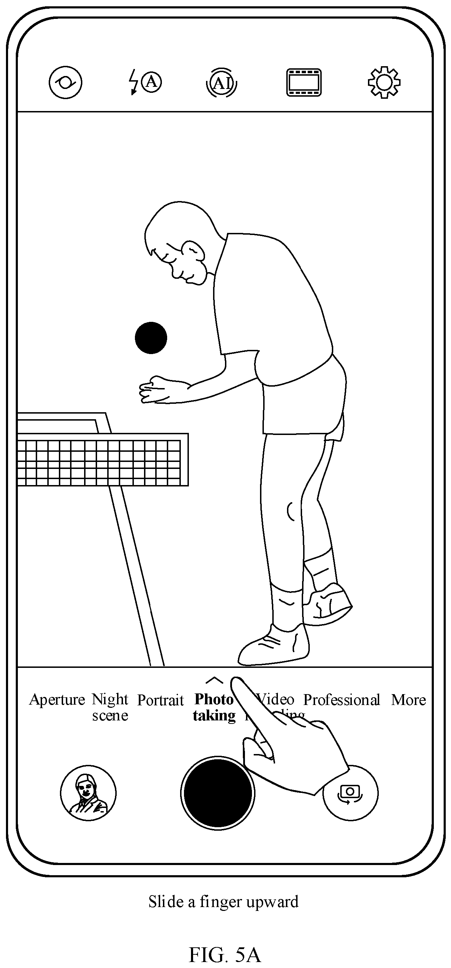

For example, FIG. 5A to FIG. 5F are a schematic diagram of a scenario in which a group of images is captured based on a calibrated depth value.

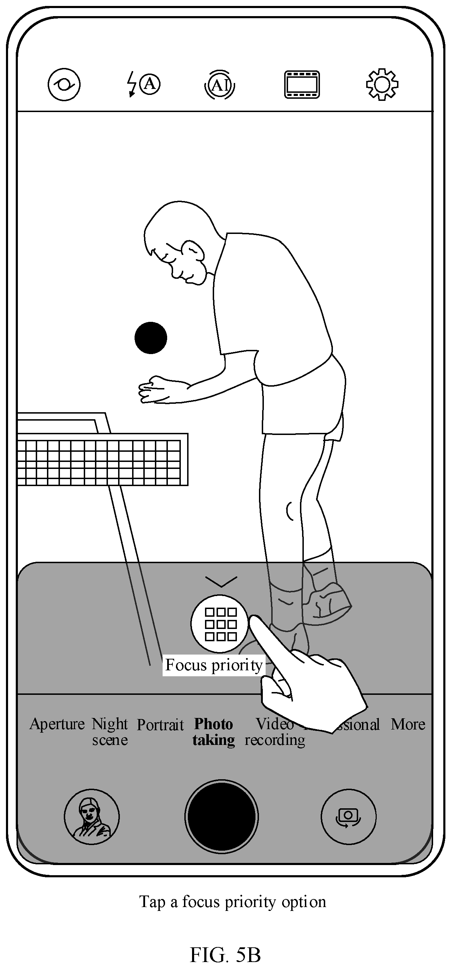

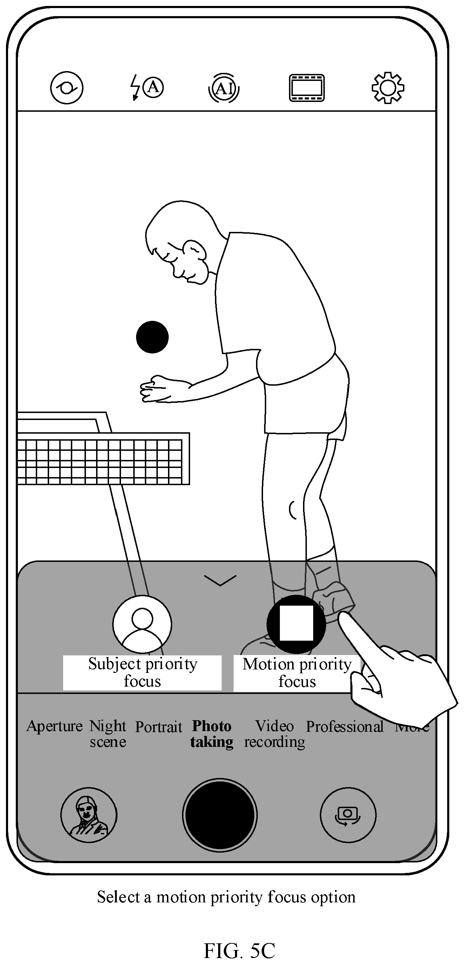

As shown in FIG. 5A, when photographing a fast moving object such as a ball, a user slides a finger upward on a lower region of a photographing preview interface. As shown in FIG. 5B, a mobile phone displays a "focus priority" option. In response to a tap operation of the user on the "focus priority" option, the mobile phone displays a "subject priority focus" control and a "motion priority focus" control shown in FIG. 5C. The "subject priority focus" control is configured to trigger the mobile phone to focus a subject such as a person, and the "motion priority focus" control is configured to trigger the mobile phone to focus a fast moving object such as a ball or a vehicle. For example, if a common photographing mode is set, subject priority focus is used by default. If a snap mode is set, motion priority focus is used by default.

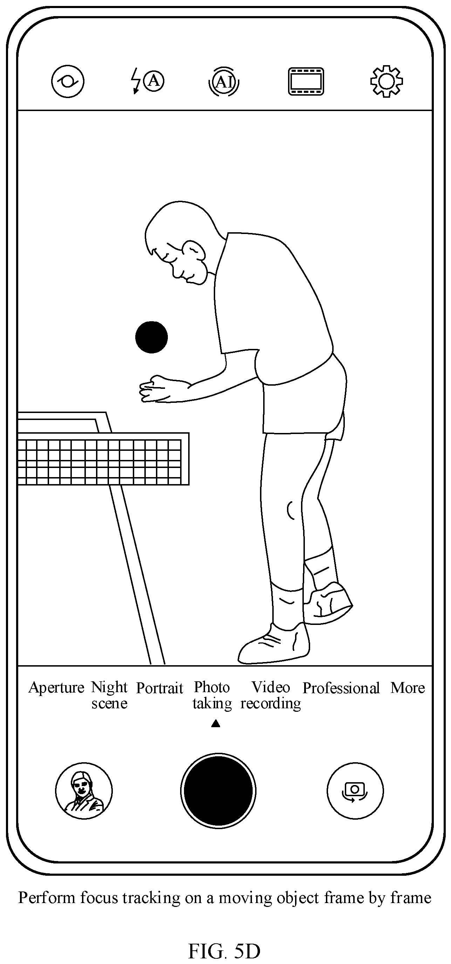

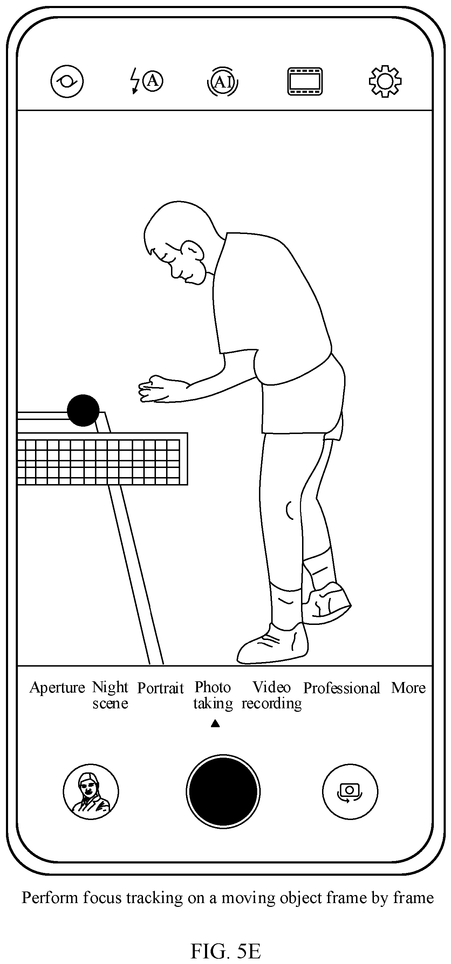

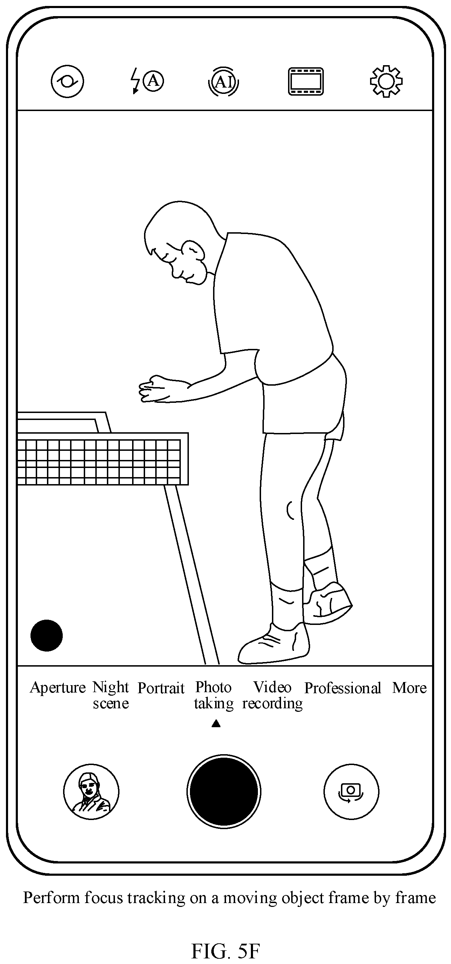

An example in which the user taps the "subject priority focus" control is used. As shown in FIG. 5D, FIG. 5E, and FIG. 5F, the mobile phone starts focus tracking on a ball frame by frame. A specific process of frame-by-frame focus tracking on the ball may be as follows: The mobile phone uses the ball as a focus object, and instructs the ToF module to perform ranging. When the ToF module performs ranging, the mobile phone may perform zero-distance point calibration by using a crosstalk signal returned by the glass cover plate as a reference signal, to reduce interference of the crosstalk signal to a target signal returned from a measured object, and obtain a depth information array map with higher accuracy. Then, the mobile phone may perform frame-by-frame focus tracking on the ball according to a depth value of a region corresponding to the ball in the depth information array map. In an example, the mobile phone may preset a mapping relationship table between a depth value and a movement distance (code) of a motor, and the mapping relationship table may include a plurality of groups of depth values and movement displacements of the motor. As shown in Table 1, if a depth value measured by the ToF module is x3, a camera application controls the motor to push a lens to move according to a displacement y3. If a depth value measured by the ToF module is x4, the camera application controls the motor to push the lens to move according to a displacement y4.

**Table 1**

| Depth value | Movement distance of a motor |
|---|---|
| x1 | y1 |
| x2 | y2 |
| x3 | y3 |
| x4 | y4 |

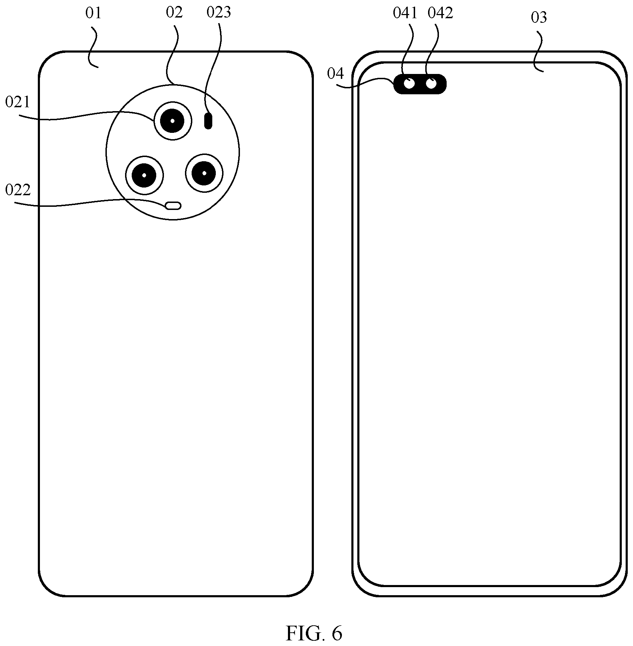

For example, FIG. 6 is a schematic diagram of a hardware structure of a bar-type mobile phone.

As shown in FIG. 6, a rear cover 01 of the mobile phone has a hollow region for arranging a rear camera module 02. The rear camera module 02 includes at least one rear camera 021, a flash light 022, and a ToF module 023. In an example, a whole transparent substrate such as a glass cover plate is arranged on an outer surface of the camera module 02. The glass cover plate may protect the rear camera 021, the flash light 022, and the ToF module 023, so that the rear camera 021, the flash light 022, and the ToF module 023 do not need to be exposed to the outside, to prevent dirt from entering the rear camera module 02. In another example, transparent substrates are respectively arranged on external surfaces of the rear camera 021, the flash light 022, and the ToF module 023. In still another example, when the whole transparent substrate is arranged on the outer surface of the camera module 02, the transparent substrate may be arranged according to a shape and a size of the hollow region. For example, when the hollow region is circular, the transparent substrate is circular.

As shown in FIG. 6, a top region of a display module has a hollow region for arranging a front camera module 04. The front camera module 04 includes a front camera 041 and a ToF module 042. The hollow region is surrounded by a display screen 03. The display screen 03 includes a pixel arrangement and is configured to display an image. In an example, a whole transparent substrate such a s a glass cover plate covers an outer surface of the display module. The glass cover plate may protect the display screen 03, the front camera 041, and the ToF module 042, so that the display screen 03, the front camera 041, and the ToF module 042 do not need to be exposed to the outside.

It should be noted that, FIG. 6 is described by using an example in which the ToF modules are respectively arranged on the rear camera module 02 and the front camera module 04 of the mobile phone. This application is not limited thereto. In another example, in the mobile phone, the ToF module may be arranged only on the rear camera module 02, and the ToF module is not arranged on the front camera module 04.

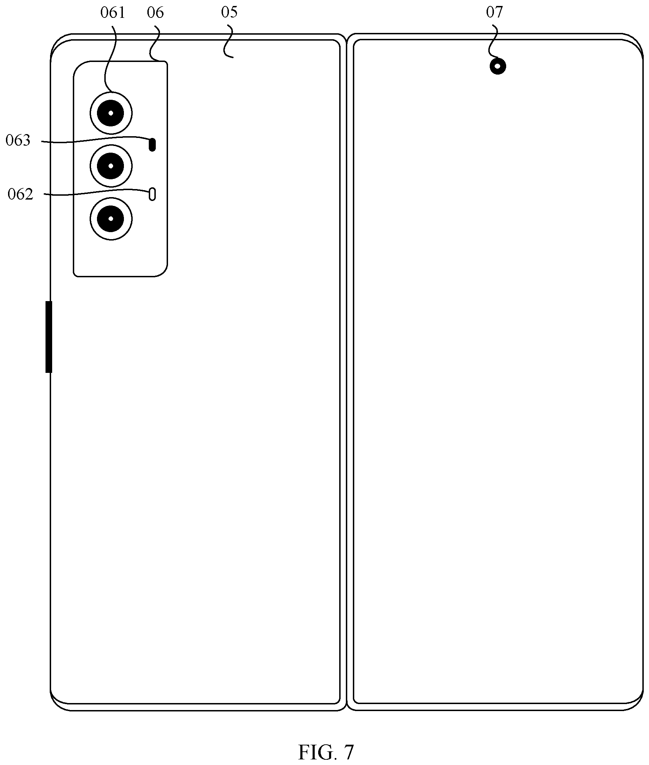

For example, FIG. 7 is a schematic diagram of a hardware structure of a foldable-display mobile phone.

A rear cover 05 of the foldable-screen mobile phone has a hollow region for arranging a rear camera module 06.

The rear camera module 06 includes at least one rear camera 061, a flash light 062, and a ToF module 063. In an example, a whole transparent substrate such as a glass cover plate is arranged on an outer surface of the rear camera module 06. A top region of a display module of an outer screen has a hollow region for arranging a front camera 07.

It should be noted that, the ToF module 023 and the ToF module 042 shown in FIG. 6, and the ToF module 063 shown in FIG. 7 may all be configured to implement the depth value determining method provided in this application.

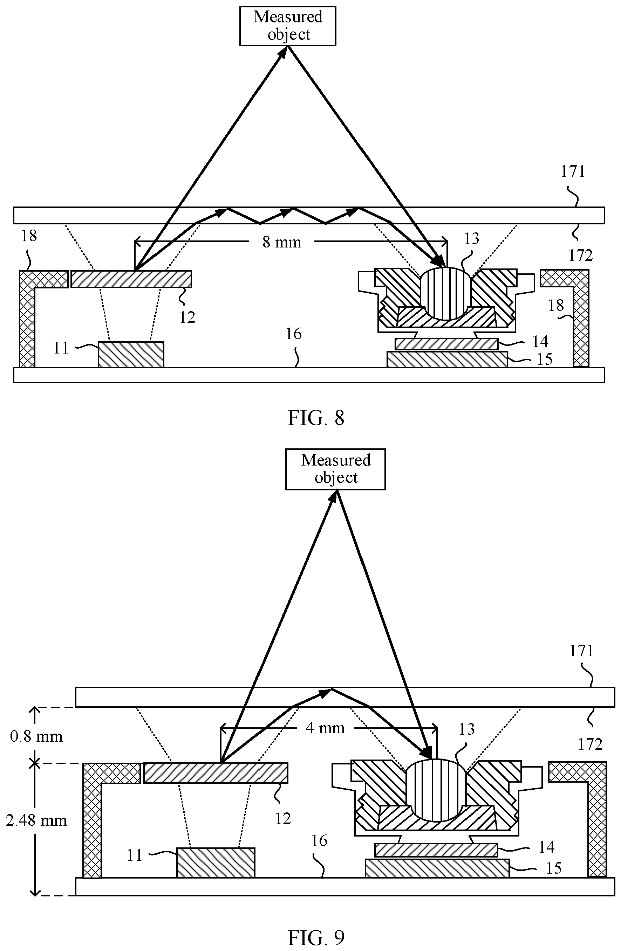

A hardware principle of the ToF module provided in this application is described by using an example with reference to FIG. 8 to FIG. 11.

For example, FIG. 8 is a schematic diagram of a hardware structure of a ToF module.

As shown in FIG. 8, the ToF module may include: a substrate 16, and a transmit end and a receive end that are arranged on the substrate 16. The transmit end and the receive end may be devices provided by different suppliers, or may be devices of different models provided by a same supplier. The transmit end may include: a pulse laser (pulsed laser) 11 and a light scattering element (diffuser) 12. The receive end may include: a light detection element 13, a pulse response filter 14, and an optical receiver 15. The ToF module may be arranged below a glass cover plate. The glass cover plate is a light-transmitting region, and has a specific light-transmitting capability. The glass cover plate includes a first surface 171 and a second surface 172. The first surface 171 is a surface away from the ToF module, and the second surface 172 is a surface close to the ToF module.

The pulse laser 11 is configured to transmit a pulse signal in a direction of the light scattering element 12. In time domain, a waveform of the pulse signal may be distinguished by using an oscilloscope as a saw wave, a sine wave, a triangle wave, or the like. In an example, the pulse laser 11 may be an initial emitting source based on a vertical-cavity surface-emitting laser (vertical-cavity surface-emitting laser, VCSEL), but the initial emitting source has a relatively small divergence angle of approximately 20°. To enable the transmit end to cover a larger field of view angle, in this application, the light scattering element 12 is further arranged. The light scattering element 12, which is also referred to as a beam disperser, may be rectangular or square, is arranged above the pulse laser 11, and is configured to perform scattering processing on the pulse signal transmitted by the pulse laser 11, to increase a divergence angle of a light beam. It may be understood that the pulse laser 11 relies on the light scattering element 12 to scatter a light beam, so that the light beam can cover more field of view (field of view) regions, and can cover all locations of a measured object without gaps. This is equivalent to projecting a light beam to a plane. Therefore, the pulse laser 11 and the light scattering element 12 are also collectively referred to as a surface light source. Compared with a conventional point light source formed by a combination of a VCSEL and a diffractive optical element (diffractive optical element, DOE), the surface light source used in this application is simpler in a hardware design, has relatively low costs, and can cover all the locations of the measured object.

The light detection element 13 is an optical lens, and may be configured to converge received light. The pulse response filter 14 may be configured to filter the converged light, and remove an interference signal such as ambient light noise that is not in a target frequency band, to obtain a signal in the target frequency band, where the target frequency band is a frequency band of the pulse signal. The optical receiver 15 may include a sensor array, for example, including a plurality of single photo avalanche diodes (single photon avalanche diodes, SPADs), and is configured to receive the pulse signal.

To better protect the components such as the pulse laser 11, the light scattering element 12, the light detection element 13, the pulse response filter 14, and the optical receiver 15, as shown in FIG. 8, a housing 18 is further arranged outside these components, and the housing 18 covers these components. In addition, a hollow region is further provided on a surface of the housing 18 close to the glass cover plate, so that light from the light scattering element 12 may pass through the hollow region and the glass cover plate to reach the measured object, and light reflected by the measured object may pass through the glass cover plate and the hollow region to reach the light detection element 13. In an example, an upper surface of the light scattering element 12 and an upper surface of the light detection element 13 are flush with an upper surface of the housing 18. In another example, a distance between the upper surface of the housing 18 and the second surface 172 of the glass cover plate is less than a distance between the upper surface of the light scattering element 12 and the second surface 172 of the glass cover plate, and a distance between the upper surface of the housing 18 and the second surface 172 of the glass cover plate is less than a distance between the upper surface of the light detection element 13 and the second surface 172 of the glass cover plate.

In an example, as shown in FIG. 8, a distance between a geometric center of the light scattering element 12 and a geometric center (which may also be an optical center) of the light detection element 13 is set to 8 mm (millimeters). In this case, a main path of a crosstalk signal is reflected for a plurality of times inside the glass cover plate. It may be understood that a larger quantity of times of reflection of the crosstalk signal inside the glass cover plate indicates that a beam of the crosstalk signal is more dispersed. Consequently, the crosstalk signal is shifted and spreads on a histogram, affecting accuracy of using the crosstalk signal as a reference signal for zero-distance point calibration.

Theoretically, to avoid a plurality of times of reflection of the crosstalk signal inside the glass cover plate, the distance between the geometric center of the light scattering element 12 and the geometric center of the light detection element 13 should be reduced as much as possible. However, the light scattering element 12 and the light detection element 13 each have a specific volume, so that the distance between the geometric center of the light scattering element 12 and the geometric center of the light detection element 13 cannot be infinitely small. Based on a current process level, on a basis of the hardware structure shown in FIG. 8, as shown in FIG. 9, in this application, the distance between the geometric center of the light scattering element 12 and the geometric center of the light detection element 13 is reduced from 8 mm to 4 mm, the distance between the upper surface of the housing 18 of the ToF module and the second surface 172 of the glass cover plate is set to 0.8 mm, and a thickness of the ToF module in an optical axis direction is set to 2.48 mm.

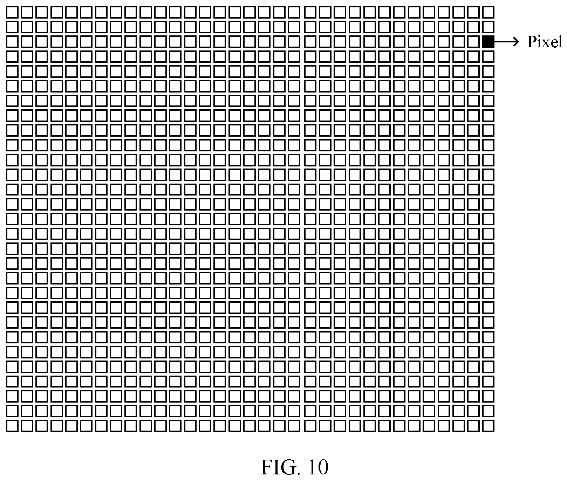

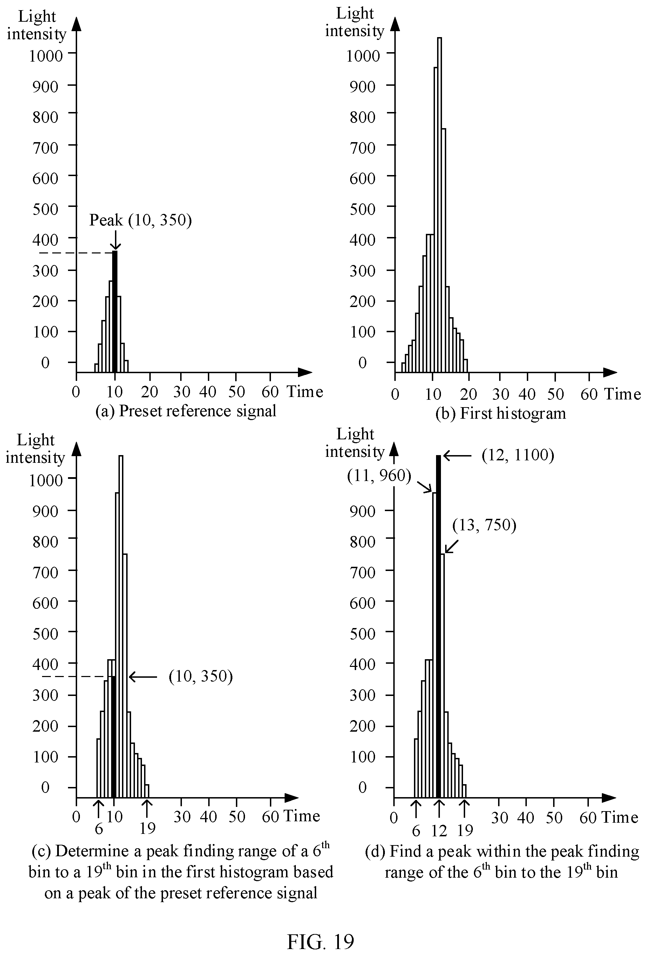

In an example, based on a hardware structure of the ToF module shown in FIG. 9, as shown in FIG. 10, the optical receiver 15 may be an SPAD chip. The SPAD chip is a planar matrix device including a plurality of SPAD sensors. The SPAD chip is also referred to as a receive end planar array device. The receive end planar array device includes m*n SPAD sensors. One SPAD sensor represents one pixel. For example, m=240, and n=180. In an auxiliary focusing scenario, a distance detected by one SPAD sensor is a distance between a point on a measured object and the ToF module. A larger distance detected by one SPAD sensor indicates a larger depth value of such a pixel and a larger distance between the measured object and the ToF module. A smaller distance detected by one SPAD sensor indicates a smaller depth value of such a pixel and a smaller distance between the measured object and the ToF module.

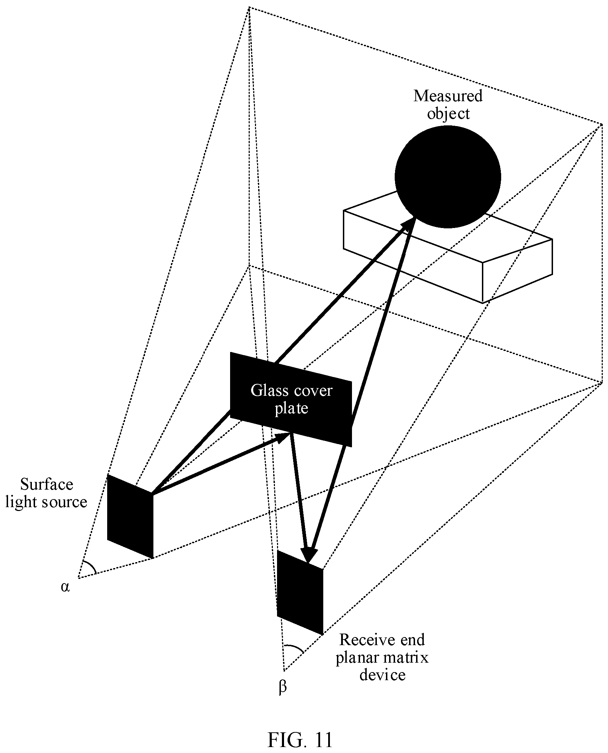

In an example, based on the hardware structure of the ToF module shown in FIG. 9, as shown in FIG. 11, a surface light source emits a light beam having a rectangular cross section. The light beam is divided into two paths. In a first path, a part of light of the light beam passes through a glass cover plate 204 to reach a measured object, is reflected by the measured object, and passes through the glass cover plate 204 to return to a receive end planar array device. In a second path, after reaching the glass cover plate 204, the other part of light of the light beam returns to the receive end planar array device. A subtended angle at which the surface light source emits the light beam is $\alpha$, a subtended angle at which the receive end planar array device receives the light beam is $\beta$. For example, $\alpha=\beta=70°$. It should be noted that, the subtended angle is an opening angle of the light beam in a diagonal direction of the rectangle. For example, according to a ranging requirement, in this application, the subtended angle $\alpha$ and the subtended angle $\beta$ are set to 70°.

Optionally, when a subtended angle $\alpha$ at which a transmit end emits a light beam is 70° (as shown in FIG. 11), a subtended angle $\beta$ at which a receive end receives the light beam is 70° (as shown in FIG. 11), the distance between the geometric center of the light scattering element 12 and the geometric center of the light detection element 13 is 4 mm (as shown in FIG. 9), the distance between the upper surface of the housing 18 of the ToF module and the second surface 172 of the glass cover plate is 0.8 mm (as shown in FIG. 9), and the thickness of the ToF module in the optical axis direction is 2.48 mm (as shown in FIG. 9), the main path of the crosstalk signal shown in FIG. 9 may be reflected once on the first surface 171 of the glass cover plate. In addition, a ranging range of the hardware structure of the ToF module shown in FIG. 9 is [5 cm, 5m], and can basically meet a ranging requirement of the electronic device. It should be understood that with improvement of the process level, the distance between the geometric center of the light scattering element 12 and the geometric center of the light detection element 13 can be further reduced.

In this embodiment of this application, the ToF module shown in FIG. 9 to FIG. 11 may measure time of flight based on a ToF method to obtain a depth value, so as to complete the depth value determining method provided in this application. The ToF method includes a direct time of flight (direct time of flight, dToF) method and an indirect time of flight (indirect time of flight, iToF) method. In the dToF method, time of flight is directly measured through a pulse light radar. In the iToF method, time of flight is indirectly estimated through phase-resolved measurement. In this application, the time of flight may be measured based on the dToF method, or the time of flight may be measured by using the iToF method.

The principle of the depth value determining method provided in this application is described below by using an example in which the ToF module measures time of flight based on the dToF method.

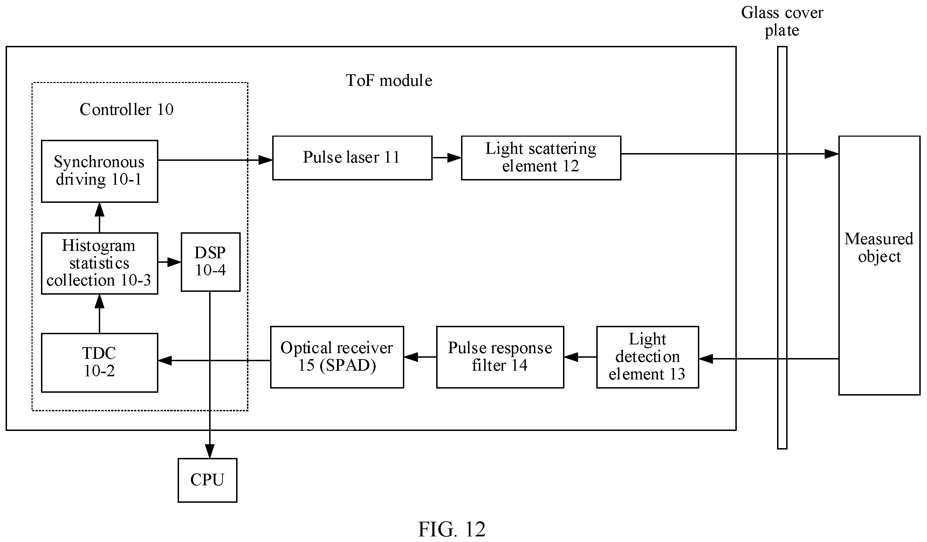

For example, FIG. 12 is a flowchart of a principle of a depth value determining method according to this application.

The ToF module may include the pulse laser 11, the light scattering element 12, the light detection element 13, the pulse response filter 14, and the optical receiver 15 shown in FIG. 9. For structures of the pulse laser 11, the light scattering element 12, the light detection element 13, the pulse response filter 14, and the optical receiver 15, refer to the descriptions in the foregoing embodiments. Details are not described herein again.

As shown in FIG. 12, the ToF module may further include a controller 10. The controller 10 may include a synchronous driving module 10-1, a time to digital converter (time to digital converter, TDC) 10-2, a histogram (histogram) statistics collection module 10-3, and a digital signal processor (digital signal process, DSP) 10-4. The synchronous driving module 10-1 may be configured to control clock synchronization between the transmit end and the receive end. The TDC 10-2 is a circuit configured to measure time, and may convert a contiguous time signal into a digital signal, and measure or record a time interval of the signal, to implement digitization of time measurement. The histogram statistics collection module 10-3 may be configured to record a digit output by the TDC 10-2 each time, and counts a quantity of photons in each time period to obtain a frequency distribution histogram of photons varying with time. The DSP 10-4 may be configured to analyze the histogram to find depth information.

Specifically, the depth value determining method may include the following S101 to S105.

S101: The pulse laser 11 transmits a plurality of pulse signals in response to a control signal of the synchronous driving module 10-1.

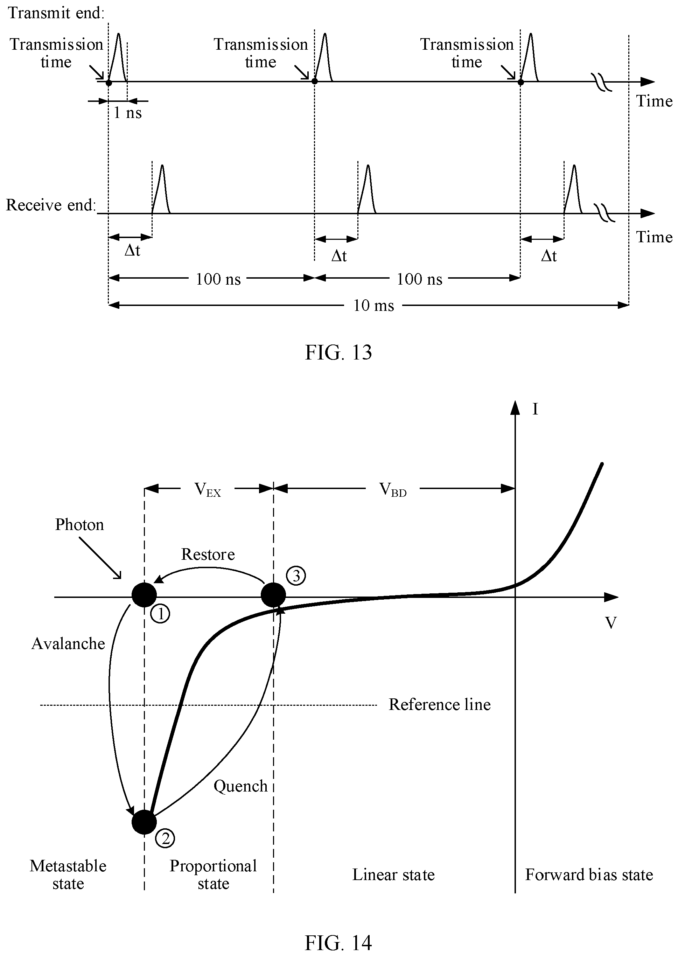

An example in which depth value measurement is performed at a depth map refresh rate of 60 Hz is used. As shown in FIG. 13, the synchronous driving module 10-1 may control the pulse laser 11 to perform detection once every 16 ms (milliseconds). Duration of each detection is 10 ms, that is, detection duration is 10 ms. Within each detection duration, the synchronous driving module 10-1 may control the transmit end to transmit a pulse wave every 100 ns, where a pulse width of a pulse wave is approximately 1 ns.

S102: The optical receiver 15 receives the pulse signals.

The pulse signals transmitted by the pulse laser 11 sequentially pass through the light scattering element 12 and the glass cover plate to reach the measured object, are reflected by the measured object, and then sequentially pass through the light detection element 13 and the pulse response filter 14 to reach the optical receiver 15.

In some embodiments, the optical receiver may be a planar matrix device including a plurality of SPAD sensors.

For example, FIG. 14 is a schematic diagram of an operating principle of a single SPAD sensor.

The SPAD sensor performs light sensing based on a particle state of light and a probability statistical model.

As shown in FIG. 14, the operating principle of the SPAD sensor is divided into the following several phases: First phase corresponds to a state 1. Before the SPAD sensor is triggered by a photon, a bias voltage between two ends of the SPAD sensor briefly exceeds a breakdown voltage VBD, and there is no current on a vertical axis. In this case, the SPAD sensor is in a metastable state (geiger mode), which is also referred to as a geiger mode.

Second phase corresponds to a transition from the state 1 to a state 2. When a photon comes, the SPAD sensor absorbs a single photon. Due to a high reverse bias electric field inside the SPAD sensor, few electrons generated through photon conversion trigger the SPAD sensor to generate an avalanche (avalanche) state. For example, the bias voltage between the two ends of the SPAD sensor exceeds a voltage corresponding to a reference line shown in FIG. 14, a digital signal that can be captured by the TDC 10-2 is generated and is recorded as arrival of a photon by the TDC 10-2.

Third phase corresponds to a transition from the state 2 to a state 3. After an avalanche, a large amount of current is generated and flows through a quench (quench) resistor, so that the bias voltage between the two ends of the SPAD sensor is less than the breakdown voltage VBD. Therefore, the avalanche current of the SPAD sensor is turned off, and the SPAD sensor stops operating.

Fourth phase corresponds to a transition from the state 3 to the state 1. The SPAD sensor is charged by using a VSPAD power supply, so that a working voltage of the SPAD sensor is greater than the breakdown voltage VBD, and the SPAD sensor returns to an initial state.

Generally, time required for the SPAD sensor to return from the avalanche to the initial state is referred to as dead time (dead time), and the dead time may be typically adjusted by using a quench current. Each time the SPAD sensor captures a photon, the foregoing steps are performed, and an electrical pulse is generated. The electrical pulse is amplified and shaped through a front-end circuit and then sent to the TDC 10-2.

It should be noted that, a single photon does not necessarily trigger an avalanche, which depends on photon detection efficiency (photon detection efficiencies, PDE) of the SPAD sensor. Even so, sensitivity of the SPAD sensing to a photon is much higher than that of an avalanche photodiode (avalanche photodiodes, APD).

It can be learned from the foregoing operating principle that, a single SPAD sensor can be triggered only once at a same moment. Therefore, the SPAD sensor is typically in an array form. There may be a plurality of photon counts at a same moment or within sampling time of one TDC.

In this embodiment of this application, the dToF method is implemented based on a time correlated single photon counting (time correlated single photon counting, TCSPC) technology.

S103: The TDC 10-2 converts the pulse signal into a digital signal.

S104: The histogram statistics collection module 10-3 records a digit output by the TDC 10-2 each time, and counts a quantity of photons in each time period to obtain a histogram of photons varying with time.

Time from a moment at which the transmit end transmits a pulse wave to a moment at which the pulse wave is received is time of flight. However, when a pulse width of a pulse wave is 1 ns, a photon level is reached. Based on the wave-particle duality of light, a single photon has a fluctuation. Therefore, time at which the receive end receives a photon may vary.

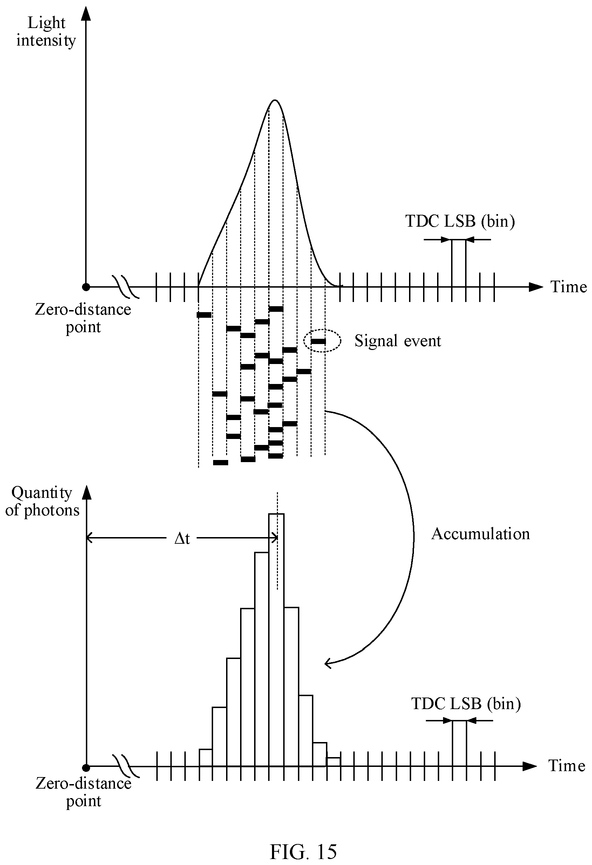

For example, FIG. 15 is a schematic diagram of a principle of TCSPC. When an optical signal is very weak and a detection frequency is very high, a photon may be detected in a detection periodicity, and no photon may be detected in a detection periodicity. As shown in FIG. 15, a photon is considered as a random signal event. The signal event corresponds to a time period. After photons are repeatedly measured over a plurality of detection periodicities, the histogram statistics collection module 10-3 counts a quantity of photons in each time period, to obtain a frequency distribution histogram of photons varying with time, and the histogram is fitted, to obtain an intensity change of the optical signal. A least significant bit (least significant bit) of the TDC is represented as an LSB, and one TDC LSB is one bin. A horizontal coordinate of the histogram represents time information, and represents a quantity of bins. For example, a coordinate range of a horizontal axis corresponding to a single SPAD sensor has 1024 bins, ToF time is 100 ns, time of each bin is 500 ps (pico second), and 500 ps is a resolution of the TDC. A quantity of bins for an N-bit TDC is $2^N$, and 1024 bins correspond to a 10-bit TDC. It may be understood that, within one detection duration (for example, 10 ms), photon counts triggered by the SPAD in each detection periodicity (for example, 100 ns) are added, to obtain photon counts within the detection duration. Though the TCSPC, a relationship between time and a light intensity is converted into a relationship between time and a quantity of photons.

In an example, a data form of the histogram is a 1200*64 array. 1200 represents 1200 pixels in a depth map, and 64 represents 64 bins on the horizontal axis.

S105: The DSP 10-4 calculates a calibrated depth value based on the histogram obtained through statistics collection by using the histogram statistics collection module 10-3. Alternatively, the DSP may transmit the histogram to a CPU of the electronic device, and the CPU calculates a calibrated depth value based on the histogram.

The CPU may be a main processor of a system on chip (system on chip, SOC).

It should be noted that, an execution body of calculating the depth value is not specifically limited in this application. For example, the execution body may alternatively be the DSP or the CPU, or may be another software and hardware module of the electronic device, and may be adjusted according to an actual use requirement.

Theoretically, based on the histogram obtained through statistics collection by using the histogram statistics collection module 10-3, the DSP 10-4 or the CPU may use time corresponding to a wave peak point as time of flight. An example in which a pulse wave is transmitted every 100 ns in one detection duration (for example, 10 ms) is used. If each time point of emitting a pulse wave is aligned as a zero-distance point, time of flight $\Delta t$ of a pulse signal may be calculated according to a quantity of bins between the zero-distance point and a peak on the horizontal axis. However, with reference to the descriptions of the foregoing embodiments, due to impact of the crosstalk signal returned by the glass cover plate, if each time point of emitting a pulse wave is aligned as the zero-distance point, the time of flight $\Delta t$ calculated based on the quantity of bins between the zero-distance point and the peak on the horizontal axis has a deviation. Consequently, actually measured depth information also has a deviation.

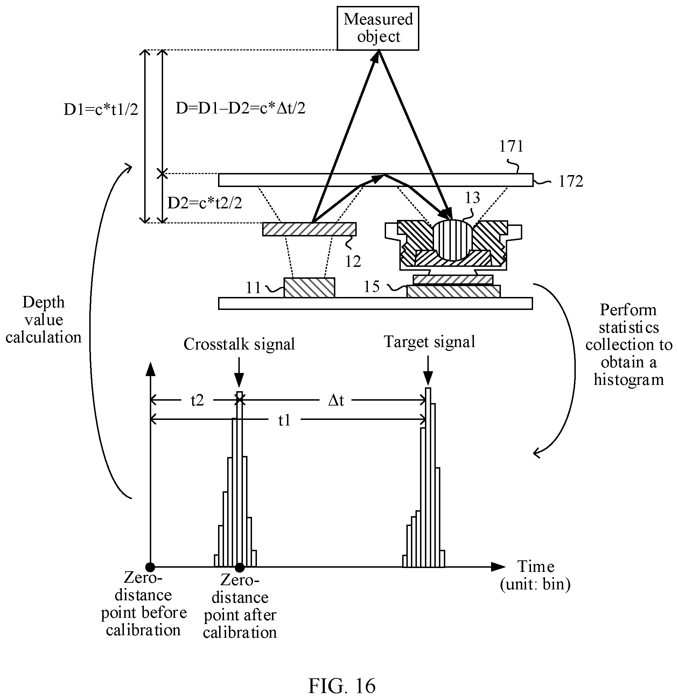

To resolve a problem that a crosstalk signal causes a deviation of depth information, based on a histogram obtained based on the dToF method, as shown in FIG. 16, a time point at which the glass cover plate returns a crosstalk signal may be used as a zero-distance point, to reduce interference of the crosstalk signal to a target signal returned from a measured object.

As shown in FIG. 16, time at which the pulse laser 11 transmits a pulse signal is aligned as a zero-distance point before calibration. The pulse signal transmitted by the transmit end is divided into two paths: In a first path, a part of light passes through the glass cover plate to reach the measured object, then is reflected by the measured object, and passes through the glass cover plate to return to the receive end of the ToF module. In a second path, the other part of light reaches the outer surface 171 of the glass cover plate and then is reflected back. Because a distance between the ToF module and the glass cover plate is less than a distance between the ToF module and the measured object, time at which the ToF module receives a crosstalk signal returned through the second path is earlier than time at which the ToF module receives a target signal returned through the first path. On the horizontal axis of the histogram, received time of the crosstalk signal is earlier than received time of the target signal, that is, the received time of the crosstalk signal is closer to the zero-distance point before calibration.

A scenario in which a user performs shooting by using the rear camera module 02 shown in FIG. 6 is used as an example. The glass cover plate arranged on an outer surface of the rear camera module 02 is a point closest to the measured object, and a distance D between the outer surface 171 of the glass cover plate and the measured object is considered as a distance between the electronic device and the measured object. For example, the distance D between the first surface 171 of the glass cover plate and the measured object 200 may be obtained by using the following equation (2):

$$D=D1-D2=c*t1/2-c*t2/2=c*\Delta t/2 \qquad (2).$$

$\Delta t=t1-t2$. $\Delta t$ represents time from a zero-distance point after calibration to receiving the target signal. t1 represents time of flight of the target signal. t2 represents time of flight of the crosstalk signal. D represents a distance between the electronic device and the measured object 200. D1 represents a distance between the transmit end and the measured object 200. D2 represents a distance between the transmit end and the first surface 171 of the glass cover plate 204.

In the foregoing solution, the zero-distance point after calibration is time at which the receive end receives the crosstalk signal returned by the glass cover plate. The time at which the receive end receives the crosstalk signal returned by the glass cover plate is subtracted from time at which the receive end receives the target signal returned by the measured object, to equal to calibrated time of flight $\Delta t$. In this embodiment of this application, a time point of the crosstalk signal returned by the glass cover plate is used as a zero-distance point, so that interference of the crosstalk signal to the target signal may be ignored, and the time of flight $\Delta t$ of the target signal is calibrated, so that a depth value calculated according to calibrated time of flight $\Delta t$ is more accurate.

According to the analysis of FIG. 16 in the foregoing embodiment, theoretically, the time at which the crosstalk signal returned by the glass cover plate is received is subtracted from the time at which the target signal returned by the measured object is received, to obtain the calibrated time of flight Δt. However, during actual implementation, a distance between the electronic device and the measured object may be relatively long or relatively short. Consequently, relative locations of the crosstalk signal and the target signal in the histogram obtained in S104 may change.

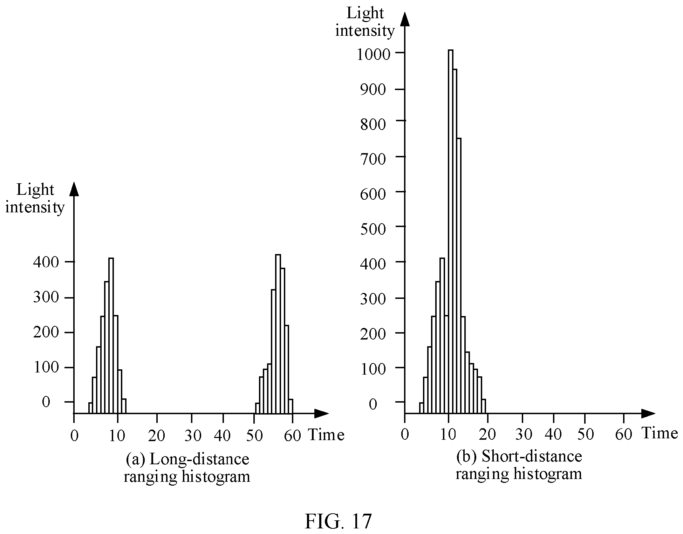

For example, FIG. 17 is a schematic diagram of a histogram during long-distance ranging and a histogram during short-distance ranging.

As shown in (a) in FIG. 17, when a distance between the electronic device and the measured object is relatively long, for example, the distance between the electronic device and the measured object is 100 cm (centimeters), an envelope location of a crosstalk signal and an envelope location of a target signal are far apart on a horizontal axis, and peaks of the two signals can be distinguished. In this case, the DSP may obtain calibrated time of flight Δt in a double-peak subtraction manner of the crosstalk signal and the target signal.

As shown in (b) in FIG. 17, when a distance between the electronic device and the measured object is relatively short, for example, the distance between the electronic device and the measured object is 40 cm, an envelope location of the crosstalk signal and an envelope location of the target signal are relatively close on the horizontal axis, envelopes of the two signals overlap, and peaks of the two signals cannot be clearly distinguished. If a confidence of the crosstalk signal is relatively high, the crosstalk signal may be mistakenly determined as the target signal. In this case, the DSP cannot directly obtain the calibrated time of flight Δt in the double-peak subtraction manner of the crosstalk signal and the target signal.

For different distribution rules of the envelope locations of the crosstalk signal and the target signal in the histograms in the long-distance ranging scenario and the short-distance ranging scenario, this application provides two depth value determining methods: using a long-distance depth value determining method when the measured object falls within a long-distance ranging range; and using a short-distance depth value determining method when the measured object falls within a short-distance ranging range.

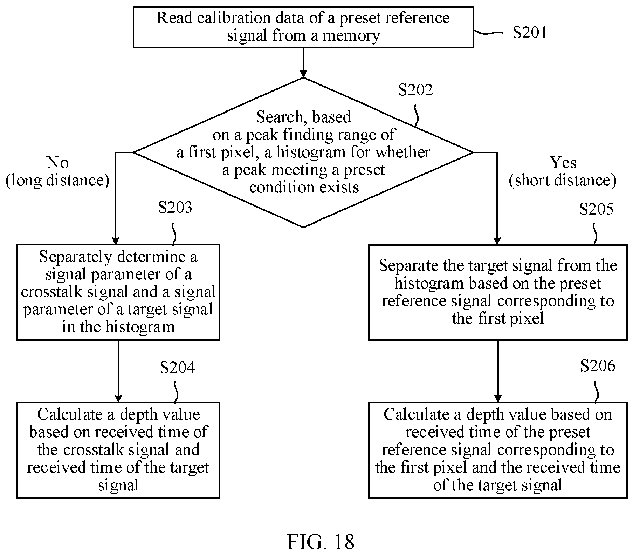

Specifically, S105 may be specifically implemented by using S201 to S206 shown in FIG. 18. An example in which the CPU is an execution body is used for description below. Certainly, the execution body may alternatively be the DSP or another software and hardware module.

S201: The CPU reads calibration data of a preset reference signal (also referred to as a preset crosstalk signal) from a memory.

The calibration data of the preset reference signal is calibration data that is of a crosstalk signal reflected by the glass cover plate of the electronic device and that is pre-stored before the electronic device is delivered from a factory. The calibration data may include: an envelope shape of the crosstalk signal, an envelope location of the crosstalk signal (namely, a value on a horizontal axis or a scale of the horizontal axis), strength distribution of the crosstalk signal (namely, a value on a vertical axis or a scale of the vertical axis), and the like. The envelope location of the crosstalk signal includes a peak location of the crosstalk signal.

In an entire production line stage of electronic manufacturing services (electronic manufacturing services, EMS), a test device may control the ToF module of the electronic device to transmit a pulse signal to the glass cover plate of the electronic device, to calibrate the crosstalk signal of the electronic device. Due to a plurality of factors such as a difference between ToF modules, a difference between a power supply value of the electronic device to the ToF module and a power supply value used by a ToF module manufacturing factory, and a difference between ambient temperatures of electronic devices, a feature of a crosstalk signal returned by a glass cover plate of each electronic device may be different. The different features may include: an envelope shape of the crosstalk signal, an envelope location of the crosstalk signal, strength distribution of the crosstalk signal, and the like. It may be understood that related data of a crosstalk signal of each electronic device is calibrated, so that after delivery, a target signal is accurately restored based on calibration data of each electronic device.

After the CPU obtains a histogram, the CPU may read the calibration data of the preset reference signal from the memory, to calibrate a zero-distance point of the histogram based on the preset reference signal. For a manner of obtaining the histogram, refer to S104. Details are not described herein again.

For example, the memory may be an original equipment manufacturer (original equipment manufacturer, OEM) memory.

For example, a depth map includes 1200 pixels. The calibration data of the preset reference signal may include: an envelope shape of a crosstalk signal of one pixel, strength distribution of crosstalk signals of the 1200 pixels, and envelope locations of the crosstalk signals of the 1200 pixels. The envelope shape of the crosstalk signal of the pixel determines envelope shapes of the 1200 pixels. The strength distribution of the crosstalk signals of the 1200 pixels determines that locations of the 1200 pixels on a vertical axis are fixed. The envelope locations of the crosstalk signals of the 1200 pixels determine that locations of the 1200 pixels on a horizontal axis are fixed. With reference to the descriptions of the foregoing embodiments, the distance between the electronic device and the measured object may be relatively long or relatively short. Consequently, relative locations of a crosstalk signal and a target signal in a histogram may change. For example, when the distance between the electronic device and the measured object is relatively long, an envelope location of the crosstalk signal and an envelope location of the target signal are far apart on a horizontal axis, and peaks of the two signals can be distinguished. When the distance between the electronic device and the measured object is relatively short, an envelope location of the crosstalk signal and an envelope location of the target signal are relatively close on the horizontal axis, envelopes of the two signals overlap, and peaks of the two signals cannot be clearly distinguished. During long-distance ranging and short-distance ranging, the envelope locations of the crosstalk signal and the target signal in the histogram have different distribution rules. Therefore, after the CPU reads all calibration data once, the CPU may perform the following S202 to S206 for each of a plurality of pixels included in the depth map, to obtain a depth value of each pixel.

S202: The CPU searches, based on a peak finding range of a first pixel, a histogram for whether a peak meeting a preset condition exists.

The first pixel is any pixel in a to-be-generated depth map.

For example, the depth map includes 1200 pixels. The calibration data may include: an envelope shape of a crosstalk signal of one pixel, strength distribution of crosstalk signals of the 1200 pixels, and envelope locations of the crosstalk signals of the 1200 pixels. After the CPU reads the calibration data, the CPU may determine, based on an envelope shape of a crosstalk signal of one pixel, strength distribution of a crosstalk signal corresponding to the first pixel, and an envelope location of the crosstalk signal corresponding to the first pixel, a peak location i of the preset reference signal corresponding to the first pixel, to obtain a peak finding range $(i-m, i+n)$ of the first pixel. i represents an $i^{th}$ bin on a horizontal axis, and the peak finding range may be from an $(i-m)^{th}$ bin to an $(i+n)^{th}$ bin. Both m and n are preset positive integers. bin is a time conversion unit. For example, one bin is equal to 300 ps or 500 ps.

It may be understood that because the envelope locations of the crosstalk signals of the 1200 pixels in the calibration data are different, a peak location i of a preset reference signal corresponding to each pixel in the depth map is different, and a peak finding range corresponding to each pixel in the depth map is also different. For example, m=4, and n=9. If i of a pixel 1 is equal to 9, a peak finding range of the pixel 1 is from a $5^{th}$ bin to an $18^{th}$ bin. If i of a pixel 2 is equal to 10, a peak finding range of the pixel 2 is from a $6^{th}$ bin to a $19^{th}$ bin. If i of a pixel 3 is equal to 8, a peak finding range of the pixel 3 is from a $4^{th}$ bin to a $17^{th}$ bin.

In some embodiments, the CPU may search the peak finding range of the histogram for a peak based on a light intensity comparison method, a reciprocal method, a Gaussian fitting method, a symmetric zero-area method, or the like.

The light intensity comparison method is used as an example. As shown in (a) in FIG. 19, a horizontal coordinate of a peak of the preset reference signal corresponding to the first pixel is i=10 bins, indicating that a light intensity value of a $10^{th}$ bin is the largest. The CPU may determine, based on i=10 bins, the peak finding range of the first pixel in a histogram shown in (b) in FIG. 19. As shown in (c) in FIG. 19, the peak finding range of the first pixel in the histogram is (a $6^{th}$ bin, a $19^{th}$ bin), that is, the peak finding range is from the $4^{th}$ bin to the $19^{th}$ bin. Then, the CPU may perform traversal starting from the $6^{th}$ bin by adding 1 to a value of the bin in sequence and compare light intensities of adjacent bins within the peak finding range. If a light intensity of a bin is greater than a light intensity of a previous bin and is greater than a light intensity of a next bin, the CPU determines that a peak is found. As shown in (d) in FIG. 19, a light intensity of an $11^{th}$ bin is equal to 960, a light intensity of a $12^{th}$ bin is equal to 1100, a light intensity of a $13^{th}$ bin is equal to 750, and the light intensity of the $12^{th}$ bin is greater than the light intensity of the $11^{th}$ bin and the light intensity of the $13^{th}$ bin. Therefore, the CPU determines that a peak is found in the $12^{th}$ bin. It should be noted that, the CPU may find one peak or may find a plurality of peaks within the peak finding range of the first pixel. Each time a peak is found, the CPU determines whether the peak meets the preset condition.

In some embodiments, the preset condition may include at least one of a first condition and a second condition.

(1) The first condition is that a signal strength of a found peak is greater than a strength of background noise.

The background noise may include ambient light noise, device dark noise caused by a circuit, noise caused by a stain on the glass cover plate, and the like. An example in which the background noise is the stain stuck on the glass cover plate is used. If strength of a background noise signal caused by the stain on the glass cover plate is relatively high, and a target signal is seriously attenuated, the CPU may incorrectly determine the background noise signal as the target signal based on a confidence algorithm. To avoid this case, the CPU may eliminate interference by determining whether signal strength of a found peak is greater than the strength of the background noise.

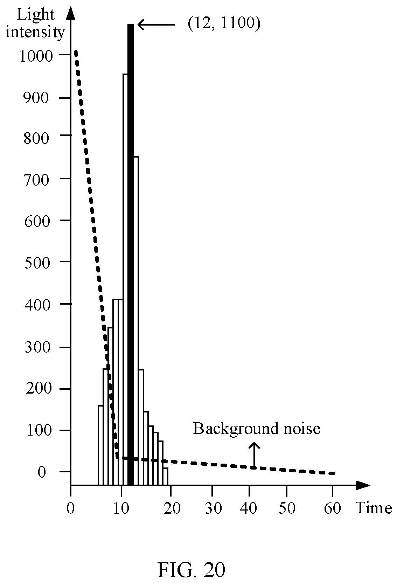

The CPU may detect a strength of the background noise in real time. For example, the strength of the background noise is shown by a dashed line in FIG. 20. Then, the CPU may determine whether a signal strength of a found peak is greater than the strength of the background noise. If the signal strength of the peak is greater than the strength of the background noise, for example, the signal strength of the peak is located above the dashed line shown in FIG. 20, it indicates that the peak is not a peak of the background noise. If the signal strength of the peak is less than or equal to the strength of the background noise, for example, the signal strength of the peak is located below the dashed line shown in FIG. 20, it indicates that the peak may be a peak of the background noise.

It should be noted that, if the CPU finds only one peak within the peak finding range and a signal strength of the peak is less than or equal to the strength of the background noise, or finds a plurality of peaks within the peak finding range and a signal strength of each peak is less than or equal to the strength of the background noise, it indicates that the found peak does not meet the first condition.

(2) The second condition is that the signal strength of the found peak is greater than N times a signal strength of a preset reference signal.

N is greater than or equal to 2. For example, N=3.

The signal strength may be a light intensity, or may be a quantity of photons obtained through counting within detection duration.

When an ambient temperature of the electronic device and a voltage of the ToF module remain unchanged, a strength of the pulse signal transmitted by the ToF module is fixed, and relative locations of the glass cover plate and the ToF module are also fixed. Therefore, strength distribution and a peak location of a crosstalk signal actually measured by the electronic device also remain unchanged. However, when a distance between the electronic device and the measured object is changed, a strength of the target signal reflected back by the measured object changes. For example, when the distance between the electronic device and the measured object is relatively short, most of light emitted by the ToF module penetrates through glass and illuminates the measured object, and the strength of the target signal reflected back by the measured object is N times that of a crosstalk signal reflected back by the glass cover plate. As the distance between the electronic device and the measured object gradually increases, the strength of the target signal is gradually attenuated.

Based on a feature that the strength of the target signal is attenuated with a propagation distance, after finding a peak, the electronic device may determine whether a signal strength of the peak is greater than N times that of the preset reference signal. If the signal strength of the peak is greater than N times the strength of the preset reference signal, it indicates that an attenuation degree of the target signal is relatively low, and a current scenario may be short-distance ranging. If the signal strength of the peak is less than or equal to N times the strength of the preset reference signal, it indicates that an attenuation degree of the target signal is relatively high, and a current scenario may be long-distance ranging. For example, N=3. A light intensity of a peak found by the CPU in the 12th bin is 1100, and a light intensity of the preset reference signal is 350. Signal strength of the peak is greater than three times that of the preset reference signal, and a current scenario may be short-distance ranging.

When an environment parameter of the electronic device remains unchanged, the CPU may directly determine the peak finding range of the first pixel based on the calibration data, and then find a peak meeting the preset condition in a histogram obtained through statistics collection by using the histogram statistics collection module. However, during actual implementation, an ambient temperature of the electronic device during data calibration may be different from an ambient temperature of the electronic device during current detection, and a voltage of the ToF module during data calibration may be different from a voltage of the ToF module during current detection. Changes of the environment parameters may affect accuracy of a depth value.

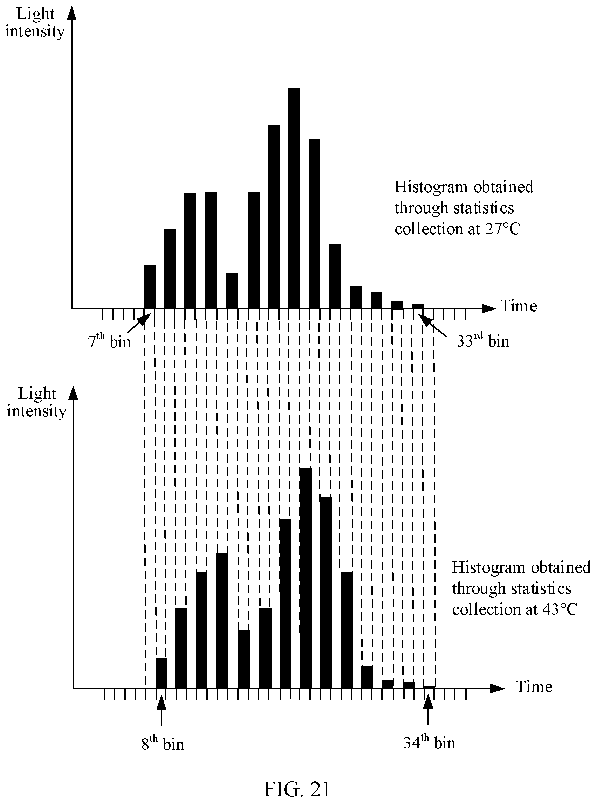

An ambient temperature is used as an example. FIG. 21 is a schematic diagram of histograms obtained by an electronic device at different temperatures.

As shown in FIG. 21, a shape of a signal envelope of a histogram at an ambient temperature of 27°C is consistent with a shape of a signal envelop of a histogram at an ambient temperature of 43°C. A difference between the two histograms lies in that: when the ambient temperature of the electronic device is 27°C, a time range of a crosstalk signal and a target signal is (a 7th bin, a 33rd bin). When the ambient temperature of the electronic device is 43°C, a time range of the crosstalk signal and the target signal is (an 8th bin, a 34th bin). In other words, as the ambient temperature of the electronic device increases, the signal envelope entirely shifts to the right by one bin along a horizontal axis.

For a long-distance ranging scenario, when an envelope of the crosstalk signal and an envelope of the target signal synchronously shift to the right along the horizontal axis due to impact of the ambient temperature, a difference between received time of the crosstalk signal and received time of the target signal remains unchanged. Therefore, a depth value calculated by the electronic device based on the difference between the received time of the crosstalk signal and the received time of the target signal also remains unchanged. In other words, in the long-distance ranging scenario, calculation of the depth value is decoupled from an ambient temperature jitter.

For a short-distance ranging scenario, when an environment parameter of the electronic device basically remains unchanged, parameters such as an envelope shape of the crosstalk signal, an envelope location of the crosstalk signal, strength distribution of the crosstalk signal, and a peak location of the crosstalk signal returned by the glass cover plate also basically remain unchanged. Therefore, the electronic device may consider the preset reference signal as an actual crosstalk signal within current detection duration. However, when the envelope location of the crosstalk signal overlaps an envelope location of the target signal, and the ambient temperature of the electronic device changes, the envelope location of the crosstalk signal and the envelope of the target signal entirely shift along the horizontal axis. In this way, within the current detection duration, there is a deviation between an actual envelope location of the crosstalk signal and an envelope location of the preset reference signal on the horizontal axis. Consequently, restoring the target signal from the histogram based on the preset reference signal is inaccurate, and consequently, a finally calculated depth value is also inaccurate.

It should be noted that, when the voltage of the ToF module changes, an envelope location of the crosstalk signal and an envelope location of the target signal in the histogram also entirely shift. For details, refer to the related descriptions of the overall shifting of the envelope location of the crosstalk signal and the envelope location of the target signal when the ambient temperature changes in FIG. 21. Details are not described herein again.

In view of that changes of the ambient temperature of the electronic device and the voltage of the ToF module may affect the accuracy of the depth value, this application provides the following two calibration solutions:

In a first calibration solution, S202 may specifically include: after reading the calibration data, the CPU may determine a peak location i of the preset reference signal corresponding to the first pixel, and then calibrate the peak location i based on the ambient temperature of the electronic device and the voltage of the ToF module, to obtain a peak location i'. Then, the CPU finds a peak meeting the preset condition within a peak finding range (i'-m, i'+n) in the histogram obtained through statistics collection by using the histogram statistics collection module. i' represents an i'th bin on a horizontal axis, and the peak finding range may be from an (i'-m)th bin to an (i'+n)th bin. Both m and n are preset positive integers.

In a first calibration solution, S202 may specifically include: after reading the calibration data, the CPU may determine a peak location i of the preset reference signal corresponding to the first pixel, and then calibrate, based on the ambient temperature of the electronic device and the voltage of the ToF module, a location of a horizontal axis of the histogram obtained through statistics collection by using the histogram statistics collection module, to obtain a calibrated histogram. Then, the CPU finds a peak meeting the preset condition within a peak finding range (i-m, i+n) in the calibrated histogram. i represents an ith bin on a horizontal axis, and the peak finding range may be from an (i-m)th bin to an (i+n)th bin. Both m and n are preset positive integers.

Regardless of which calibration solution is used, or no calibration solution is used, when a peak found in the histogram meets the preset condition, it indicates that a current scenario may be short-distance ranging, and the CPU may perform S205 and S206. When the peak found in the histogram does not meet the preset condition, it indicates that the current scenario may be long-distance ranging, and the CPU may perform S203 and S204.

S203: The CPU separately determines a signal parameter of a crosstalk signal (also referred to as a first crosstalk signal) and a signal parameter of a target signal in a histogram.

It should be noted that, the histogram in S203 is an original histogram obtained through statistics collection by using the histogram statistics collection module within current detection duration. The crosstalk signal and the target signal are actually detected signals within the current detection duration rather than being pre-stored.

The signal parameter of received time of the crosstalk signal may include: an envelope shape of the crosstalk signal actually detected within the current detection duration, an envelope location of the crosstalk signal actually detected within the current detection duration, strength distribution of the crosstalk signal actually detected within the current detection duration, and the like.

The signal parameter of the target signal may include: an envelope shape of the target signal actually detected within the current detection duration, an envelope location of the target signal actually detected within the current detection duration, strength distribution of the target signal actually detected within the current detection duration, and the like.

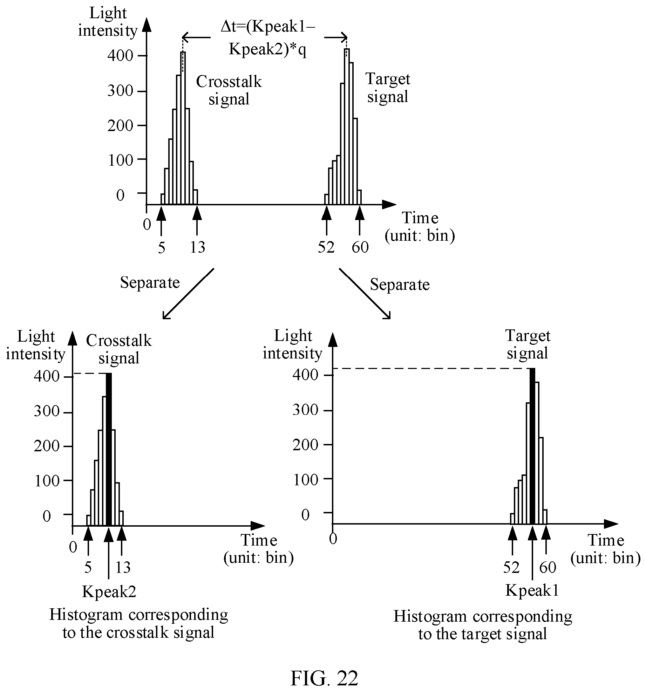

As shown in FIG. 22, in a long-distance ranging scenario, the original histogram obtained through statistics collection by using the histogram statistics collection module includes two signals. A time range of a 1st signal is (a 5th bin, a 13rd bin), and a time range of a 2nd signal is (a 52nd bin, a 60th bin). Because a distance between the ToF module and the glass cover plate is less than a distance between the ToF module and the measured object, time at which the ToF module receives a crosstalk signal is earlier than time at which the ToF module receives a target signal. Based on this, the CPU may determine that the 1st signal is the crosstalk signal and the 2nd signal is the target signal, and separately obtain a signal parameter of the crosstalk signal and a signal parameter of the target signal, that is, separate the crosstalk signal and the target signal from the histogram.

S204: The CPU calculates a depth value based on received time of the crosstalk signal and received time of the target signal.

In some embodiments, the received time of the crosstalk signal and the received time of the target signal may be determined in any one of the following manners.

Manner 1: The CPU may determine peak time of the target signal and peak time of the crosstalk signal based on the signal parameter of the received time of the crosstalk signal and the signal parameter of the target signal, then subtract the peak time of the crosstalk signal from the peak time of the target signal, to obtain time of flight $\Delta t$, and then calculate the depth value based on the time of flight $\Delta t$.

For example, as shown in FIG. 22, the CPU may separate the crosstalk signal and the target signal from the original histogram obtained through statistics collection by using the histogram statistics collection module, separately determine peak time of the crosstalk signal and peak time of the target signal, and then calculate the depth value based on the following equation (3).

$$depth = \frac{(Kpeak1 - Kpeak2) \ * \ q \ * \ c}{2} \qquad (3)$$

depth represents the depth value. Kpeak1 represents the peak time of the target signal, that is, which bin of a peak of the target signal on a horizontal axis. Kpeak2 represents the peak time of the crosstalk signal (namely, a first reference signal), that is, which bin of a peak of the crosstalk signal on the horizontal axis. q represents a time length of each bin, for example, q=500 ps/bin. c represents a light speed.

Manner 2: The CPU may separately find a first centroid in the target signal and a second centroid in the crosstalk signal based on a centroid method; subtract time of the second centroid from time of the first centroid, to obtain time of flight $\Delta t$; and then calculate the depth value based on the time of flight $\Delta t$.

For example, an equation of the centroid method is as follows:

$$\text{CentroidTof} = \frac{\sum_{i=0}^{M-1} \text{Index}_{n+i} \, * \, \text{Count}_{n+i}}{\sum_{i=0}^{M-1} \text{Count}_{n+i}} \tag{4}$$

CentroidTof represents time of a centroid. Index represents a location of a bin on the horizontal axis. Count represents a quantity of photons of a bin. M represents a full width of a pulse. n represents a location of a rising edge of a pulse.

The CPU may determine time of a centroid of the crosstalk signal by using the equation (4) based on a histogram corresponding to the crosstalk signal shown in FIG. 22. The CPU may further determine time of a centroid of the target signal by using the equation (4) based on a histogram corresponding to the target signal shown in FIG. 22.

Then, the CPU may calculate the depth value based on the following equation (5).

$$\text{depth} = \frac{(\text{CentroidTof1} - \text{CentroidTof2}) \, * \, q \, * \, c}{2} \tag{5}$$

depth represents the depth value. CentroidTof1 represents the time of the centroid of the target signal. CentroidTof2 represents the time of the centroid of the crosstalk signal. q represents a time length of each bin, for example, q=500 ps/bin. c represents a light speed.

Manner 3: The CPU finds a first peak in a fitted curve of the target signal and finds a second peak in a fitted curve of the crosstalk signal based on a three-point method; subtract time of the second peak from time of the first peak, to obtain time of flight $\Delta t$; and then calculate the depth value based on the time of flight $\Delta t$.

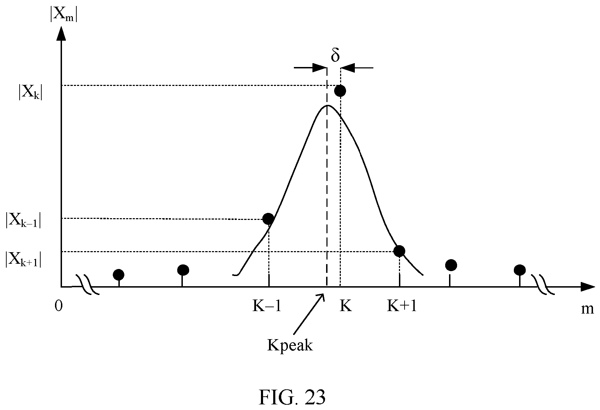

As shown in FIG. 23, an equation of the three-point method may be as follows:

$$\delta = \frac{(|X_{K+1}| - |X_{K-1}|)}{(4|X_K| - 2|X_{K+1}| - 2|X_{K-1}|)} \tag{6}$$

$\delta$ represents a time difference between peak time K of the histogram and a peak Kpeak of the fitted curve. Xk-1, Xk, and Xk+1 respectively represent light intensities corresponding to K-1, K, and K+1 on a horizontal axis in the fitted curve.

The CPU may perform fitting based on the histogram corresponding to the crosstalk signal shown in FIG. 22, to obtain a second fitted curve, and then find a second peak in the second fitted curve based on the equation (6). The CPU may further perform fitting based on the histogram corresponding to the target signal shown in FIG. 22, to obtain a first fitted curve, and then find a first peak in the first fitted curve based on the relation (6).

Then, the CPU may calculate the depth value based on the following equation (7).

$$\text{depth} = \frac{(\text{Kpeak1} - \text{Kpeak2}) \, * \, q \, * \, c}{2} = \frac{((\text{Ka} - \delta 1) - (\text{Kb} - \delta 2)) \, * \, q \, * \, c}{2} \tag{7}$$

depth represents the depth value. Kpeak1 represents a peak in the first fitted curve. Kpeak2 represents a peak in the second fitted curve. Ka represents a peak in the histogram of the target signal. Kb represents a peak in the histogram of the crosstalk signal. $\delta 1$ represents a time difference between Ka and Kpeak1. $\delta 2$ represents a time difference between Kb and Kpeak2. q represents a time length of each bin, for example, q=500 ps/bin. c represents a light speed.

Ideas of calculating the depth value in Manner 1 to Manner 3 are basically the same: feature points most representing signal received time are respectively determined in the target signal and the crosstalk signal, time of the two feature points is subtracted to obtain time of flight $\Delta t$, and then the depth value is calculated based on the time of flight $\Delta t$. It should be understood that when the distance between the electronic device and the measured object is relatively long, an envelope location of the crosstalk signal and an envelope location of the target signal are far apart on a horizontal axis, and peaks of the two signals can be distinguished. Therefore, the time of flight Δt can be obtained in a double-peak subtraction manner.

S205: The CPU separates the target signal from the histogram based on the preset reference signal corresponding to the first pixel.

Separating the target signal from the histogram means separating an array of the target signal from an array of the histogram based on signal data of the preset reference signal corresponding to the first pixel. The array of the target signal includes the signal parameters such as the envelope shape of the target signal, the envelope location of the target signal, and the strength distribution of the target signal.

When an environment parameter of the electronic device basically remains unchanged, parameters such as an envelope shape of a crosstalk signal, an envelope location of the crosstalk signal, strength distribution of the crosstalk signal, and a peak location of the crosstalk signal returned by the glass cover plate also basically remain unchanged. When the distance between the electronic device and the measured object is relatively short, the envelope location of the crosstalk signal and the envelope location of the target signal are relatively close on the horizontal axis, envelopes of the two signals overlap, and peaks of the two signals cannot be clearly distinguished. In this case, the electronic device may consider the preset reference signal corresponding to the first pixel as the crosstalk signal actually detected within the current detection duration, that is, the signal envelope of the histogram may be considered as an envelope formed by superimposing the preset reference signal and the target signal. The electronic device may restore the target signal from the histogram based on the calibration data of the preset reference signal.

With reference to the descriptions of the foregoing embodiment, if S202 is implemented by using the first calibration solution, that is, the location of the preset reference signal corresponding to the first pixel on the horizontal axis is calibrated, S205 may be specifically implemented in the following manner: The CPU separates, based on signal data of the calibrated preset reference signal, the target signal from the original histogram obtained through statistics collection by using the histogram statistics collection module. It may be understood that when a location of a signal envelope on a horizontal axis in an original histogram remains unchanged, a preset reference signal is shifted along the horizontal axis, thereby improving accuracy of a target signal restored from the histogram based on the preset reference signal in a short-distance ranging scenario, and further improving accuracy of a finally calculated depth value.

With reference to the descriptions of the foregoing embodiment, if S202 is implemented by using the second calibration solution, that is, the location on the horizontal axis in the histogram obtained through statistics collection by using the histogram statistics collection module is calibrated, S205 may be specifically implemented in the following manner: The CPU separates the target signal from the calibrated histogram based on the signal data of the preset reference signal corresponding to the first pixel. It may be understood that when a preset reference signal remains unchanged, a crosstalk signal and a target signal in an original histogram are shifted along a horizontal axis, thereby improving accuracy of the target signal restored from the histogram based on the preset reference signal in a short-distance ranging scenario, and further improving accuracy of a finally calculated depth value.

S206: The CPU calculates a depth value based on received time of the preset reference signal corresponding to the first pixel and the received time of the target signal.

It should be noted that, the received time of the preset reference signal corresponding to the first pixel, and the received time of the target signal may be determined with reference to any one of Manner 1 to Manner 3 of 204. In other words, the received time of the preset reference signal corresponding to the first pixel and the received time of the target signal may be the peak time of the histogram, may be the centroid time obtained based on the centroid method, or may be the peak time of the fitted curve obtained based on the three-point method. For details, refer to the specific descriptions of S204. Details are not described herein again.

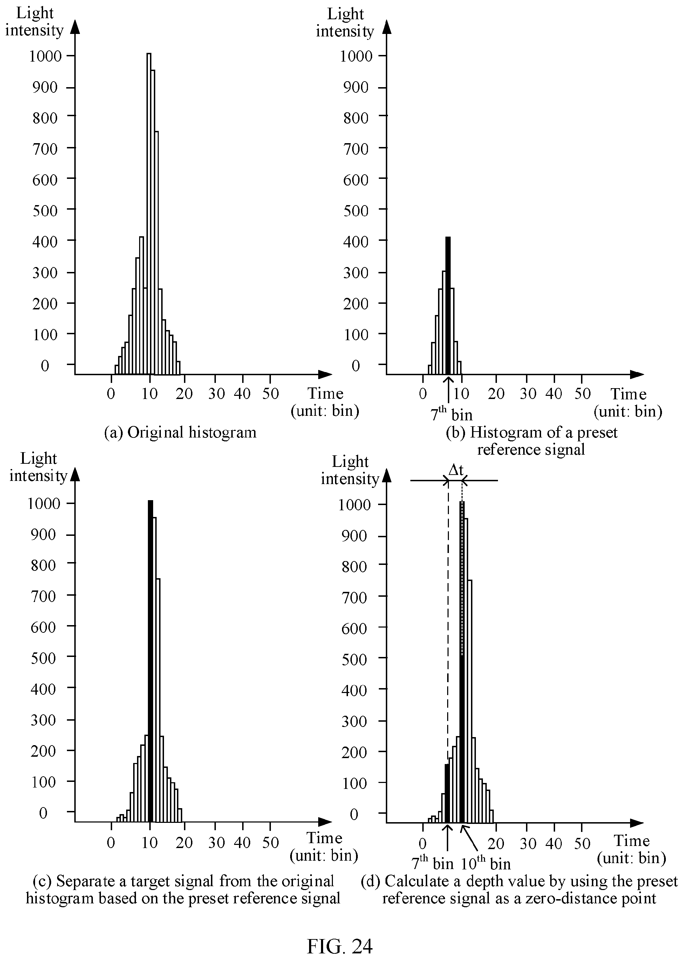

For example, FIG. 24 is a schematic diagram of calculating a depth value when a preset reference signal and a location on a horizontal axis in an original histogram are not calibrated. As shown in (a) in FIG. 24, in an original histogram obtained through statistics collection by using the histogram statistics collection module, an envelope location of a crosstalk signal and an envelope location of a target signal are relatively close on a horizontal axis, so that envelopes of the two signals overlap, and a peak of the crosstalk signal and a peak of the target signal cannot be distinguished. As shown in (b) in FIG. 24, in a histogram of the preset reference signal corresponding to the first pixel, a location of a peak on the horizontal axis is a 7th bin The CPU may remove the preset reference signal shown in (b) in FIG. 24 from the histogram shown in (a) in FIG. 24, to obtain a target signal shown in (c) in FIG. 24. A location of a peak of the target signal on the horizontal axis is a 10th bin. As shown in (d) in FIG. 24, the CPU uses the 7th bin as a 0-distance point, and calculates a depth value according to the following equation (8).

$$depth = \frac{(10bin - 7bin) * q * c}{2} \qquad (8)$$

depth represents the depth value. q represents a time length of each bin, for example, q=500 ps/bin. c represents a light speed.

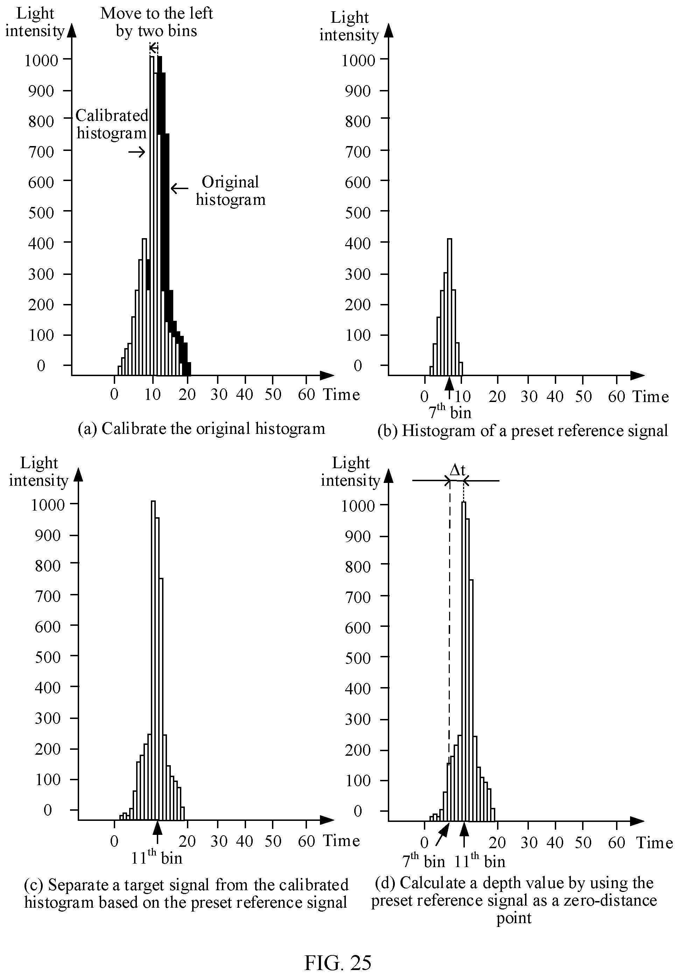

For example, FIG. 25 is a schematic diagram of calculating a depth value when a location on a horizontal axis in an original histogram is calibrated. As shown in (a) in FIG. 25, the CPU shifts, based on a current ambient temperature and a voltage of the ToF module, an original histogram obtained through statistics collection by using the histogram statistics collection module to the left by two bins along a horizontal axis, to obtain a calibrated histogram. As shown in (b) in FIG. 25, in a preset reference signal calibrated in an entire production line stage of EMS, a location of a peak on the horizontal axis is a $7^{th}$ bin. The CPU may remove the preset reference signal shown in (b) in FIG. 25 from the calibrated histogram shown in (a) in FIG. 25, to obtain a target signal shown in (c) in FIG. 25. A location of a peak of the target signal on the horizontal axis is an $11^{th}$ bin. As shown in (d) in FIG. 25, the CPU uses the $7^{th}$ bin as a zero-distance point, calculates time of flight from the $7^{th}$ bin to the $11^{th}$ bin, and then calculates a depth value based on the time of flight.

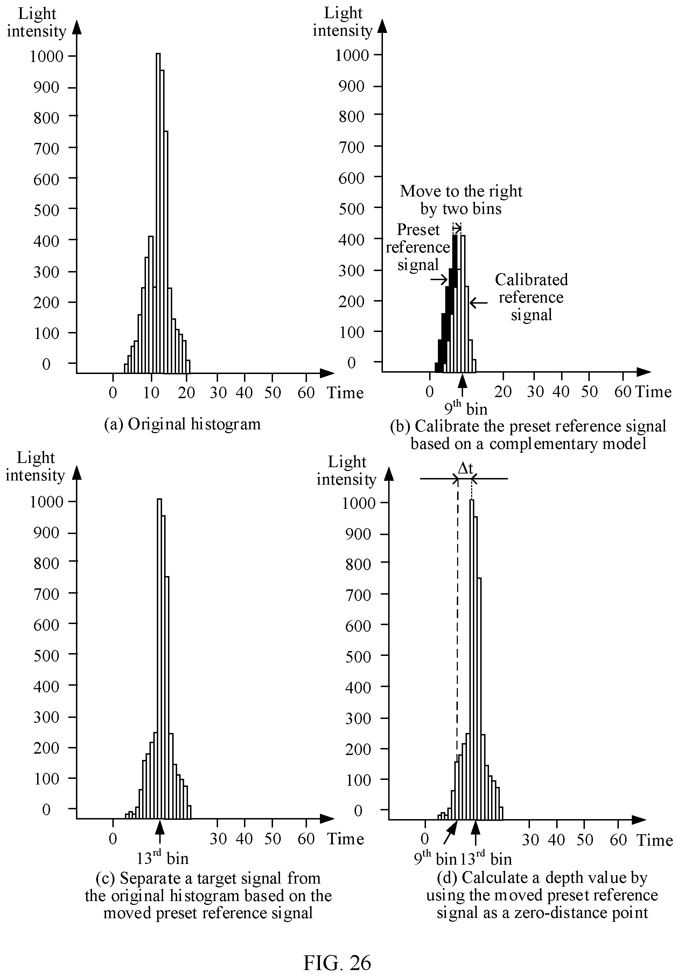

For example, FIG. 26 is a schematic diagram of calculating a depth value when a location of a preset reference signal on a horizontal axis is calibrated. For example, as shown in (a) in FIG. 26, a location of a signal envelope on a horizontal axis in an original histogram obtained through statistics collection by using the histogram statistics collection module remains unchanged. As shown in (b) in FIG. 26, the CPU shifts a preset reference signal to the right by two bins along the horizontal axis based on a current ambient temperature and a voltage of the ToF module, to obtain a calibrated reference signal. A location of a peak of a second reference signal on the horizontal axis is a $9^{th}$ bin. The CPU may remove the second reference signal shown in (b) in FIG. 26 from the original histogram shown in (a) in FIG. 26, to obtain a target signal shown in (c) in FIG. 26. A location of a peak of the target signal on the horizontal axis is a $13^{th}$ bin. As shown in (d) in FIG. 26, the CPU uses the $9^{th}$ bin as a zero-distance point, calculates time of flight from the $9^{th}$ bin to the $13^{th}$ bin, and then calculates a depth value based on the time of flight.

For different distribution rules of envelope locations of the crosstalk signal and the target signal in the histogram during long-distance ranging and short-distance ranging, the foregoing embodiments provide a depth value determining method: first determining whether a measured object from which a target signal is reflected is at a relatively short distance. When the measured object is within a long-distance ranging range, an envelope location of a crosstalk signal and an envelope location of the target signal are far apart on a horizontal axis, and peaks of the two signals can be distinguished. Therefore, a depth value may be obtained in a double-peak subtraction manner. When the measured object is within a short-distance ranging range, peaks of two signals cannot be clearly distinguished from each other. The CPU may consider the preset reference signal as a crosstalk signal actually detected within current detection duration, restore the target signal from a histogram based on the preset reference signal, and then obtain the depth value based on received time of the preset reference signal and received time of the target signal.

With reference to the descriptions of the foregoing embodiments, an ambient temperature of the electronic device during data calibration may be different from an ambient temperature of the electronic device during current detection, and a voltage of the ToF module during data calibration may be different from a voltage of the ToF module during current detection. Changes of the environment parameters may affect accuracy of the depth value. In view of that changes of the ambient temperature of the electronic device and the voltage of the ToF module may affect the accuracy of the depth value, this application provides a temperature compensation model and a voltage compensation model. The temperature compensation model is configured to calibrate a depth value when an ambient temperature of the electronic device changes, and the voltage compensation model is configured to calibrate a depth value when a voltage of the ToF module changes.

An example of a center pixel of a planar matrix device of a receive end in a ToF module is used below. A manner in which a single variable of an ambient temperature or a voltage is controlled, and an offset relationship between the variable and a strain amount (namely, a depth value) is obtained, so that a temperature compensation model and a voltage compensation model are determined based on the offset relationship is used as an example for description.

For example, a manner of obtaining the temperature compensation model is as follows.

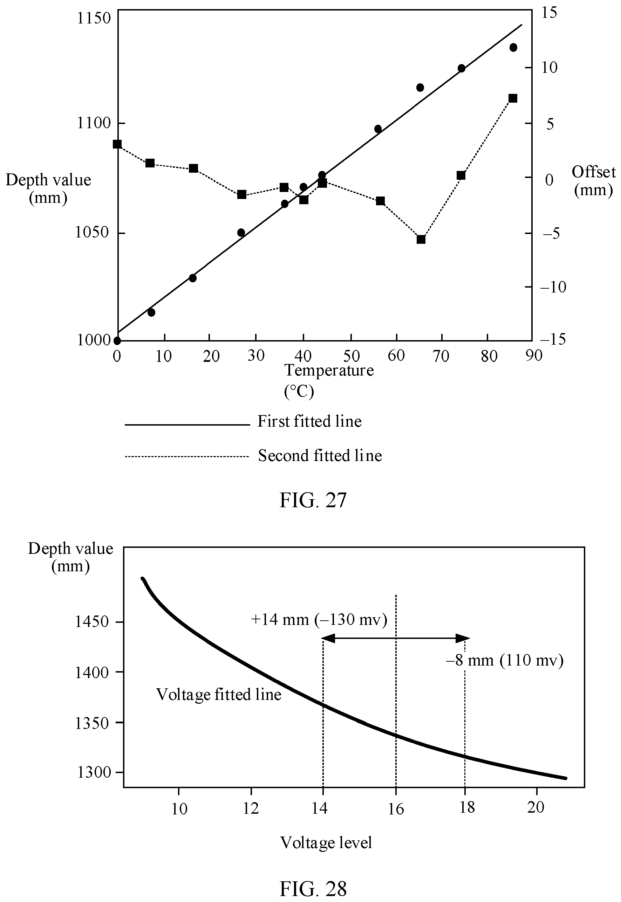

1: As shown in FIG. 27, establish a coordinate system using a temperature as a horizontal axis and a depth values as a vertical axis.

2: Measure a depth value at a lowest temperature within a preset temperature range, then gradually increase the temperature from the lowest temperature, and measure a depth values every a preset temperature (for example, 1°C or 2°C), until a depth value at a highest temperature is obtained. In this process, a depth value corresponding to each temperature is recorded. The preset temperature range may be - 20°C to 70°C, or may be 0°C to 90°C shown in FIG. 27, and may be adjusted according to an actual use requirement. This is not limited in this application.

3: Mark, based on the depth value that is recorded in 2 and corresponds to each temperature, each discrete point in the coordinate system established in 1.

4: Fit each discrete point to obtain a first fitted line.

The first fitted line is a straight line, a corresponding vertical coordinate is a left-side depth value with a unit of mm.

5: Obtain an offset of each discrete point and an offset of the first fitted curve in a direction of a vertical axis.

6: Mark, in the coordinate system established in 1), the offset corresponding to each discrete point, to obtain a second fitted line.

A vertical coordinate corresponding to the second fitted line is a left-side offset with a unit of mm.

7: Obtain an equation (9) of the temperature compensation model based on slopes of the first fitted line and the second fitted line.

$$\text{thermal}_{\text{offset}} = a * \left(\text{temperature} - \text{init}_{\text{temp}}\right)^2 + b * \left(\text{temperature} - \text{init}_{\text{temp}}\right).$$

$\text{thermal}_{\text{offset}}$ represents a depth value adjustment amount. a represents the slope of the first fitted line. b represents the slope of the second fitted line. temperature represents an ambient temperature of the electronic device during current detection. $\text{init}_{\text{temp}}$ represents a reference temperature, and the reference temperature is an ambient temperature of the electronic device during data calibration. For example, $\text{init}_{\text{temp}}$ =25°C.

During current detection, the parameters a, b, and $\text{init}_{\text{temp}}$ are preset, and the parameter temperature may be obtained in real time. In this way, based on the equation of the temperature compensation model, the electronic device may calculate a depth value adjustment amount, and then may obtain a time adjustment amount based on the depth value adjustment amount.

With reference to the descriptions of the foregoing embodiments, when the ambient temperature of the electronic device during data calibration is different from the ambient temperature of the electronic device during current detection, an envelope location of a crosstalk signal and an envelope location of a target signal entirely shift on a horizontal axis. After the temperature compensation model is obtained in the foregoing manner, the electronic device may substitute the ambient temperature of the electronic device during data calibration and the ambient temperature of the electronic device during current detection into the temperature compensation model, to calculate the time adjustment amount, and then calibrate time of flight based on the time adjustment amount, to obtain a more accurate depth value.

For example, a manner of obtaining the voltage compensation model is as follows.

1: As shown in FIG. 28, establish a coordinate system using a level as a horizontal axis and a depth values as a vertical axis.

2: Within a preset voltage level, measure a depth value of a minimum level, then gradually increase the level from the minimum level, and measure a depth value of each level until a depth value of a maximum voltage is obtained. In this process, a depth value corresponding to each level is recorded.

In an example, the electronic device may preset a plurality of voltage levels, and a voltage of the ToF module increases or decreases by 10 mv each time one voltage level changes. Typically, the voltage of the ToF module ranges from 16 levels to 18 levels. Typically, each time a level is switched, the voltage of the ToF module increases or decreases by 110 mv to 130 mv. For example, a 16th level is switched to an 18th level, the voltage of the ToF module increases by 220 mv to 260 mv, and a measured depth value is reduced by 8 mm.

3: Mark, based on the depth value that is recorded in 2 and corresponds to each level, each discrete point in the coordinate system established in 1.

4: Fit a plurality of discrete points to obtain a voltage fitted line.

A relation (10) of the voltage compensation model is obtained based on a slope of the voltage fitted line.

$$\begin{aligned}
\text{Vspad}_{\text{offset}} &= \text{Vspad}_{\text{delta}} * \text{ratio}_{\text{tof}} * 1000 \\
&= \left(\left|\text{Vspad}_{\text{meas}}\right| - \text{V}_{\text{calc}}\right) * \text{ratio}_{\text{tof}} * 1000 \\
&= \left(\left|\text{Vspad}_{\text{meas}}\right| - \left(\left|\text{Vspad1}\right| + \left(\text{bvd}_{\text{current}} - \text{bvd1}\right) * \text{bvd}_{\text{lsb}}\right)\right) * \text{ratio}_{\text{tof}} * 1000
\end{aligned}$$

$\text{Vspad}_{\text{offset}}$ represents a depth value adjustment amount. $\text{Vspad}_{\text{delta}}$ represents a difference between a voltage value of the ToF module during current detection and a voltage value recorded during data calibration. $\text{Vspad}_{\text{meas}}$ represents the voltage of the ToF module during current detection with a unit of mv. Vspad1 represents the voltage value recorded during data calibration with a unit of mv. $\text{bvd}_{\text{current}}$ represents a level during current detection. bvd1 represents a level recorded during data calibration. $\text{bvd}_{\text{lsb}}$ represents a voltage value changed when a single level is switched with a unit of mv. $\text{ratio}_{\text{tof}}$ represents a slope of a voltage fitted line.

During current detection, the parameters Vspad1, bvd1, $\text{bvd}_{\text{lsb}}$, and $\text{ratio}_{\text{tof}}$ are preset, and the parameters $\text{Vspad}_{\text{meas}}$ and $\text{bvd}_{\text{current}}$ may be obtained in real time. In this way, the electronic device may calculate a depth value adjustment amount based on the equation of the voltage compensation model, and may obtain a time adjustment amount based on the depth value adjustment amount D=c*Δt/2.

The following provides a specific example of calculating the time adjustment amount with reference to the temperature compensation model and the voltage compensation model.

For example, during current detection, the electronic device may collect a current ambient temperature value based on a temperature sensor, and use the current ambient temperature value as an ambient temperature of the electronic device. The electronic device may further collect, by using an analog-to-digital converter (analog-to-digital converter, ADC), a voltage value of a receive end of the ToF module, and use the voltage value as a voltage of the ToF module.

During current detection, an ambient temperature temperature of the electronic device is equal to 40°C, and a reference temperature $init_{temp}$ is equal to 25°C, a slope a of the first fitted line is equal to 0.5, and a slope b of the second fitted line is equal to 0.01. The electronic device may substitute these values into the equation (9), to obtain a depth value adjustment amount corresponding to the ambient temperature of the electronic device:

$$\text{thermal}_{\text{offset}} = 0.5 * (40 - 25)^2 - 0.01 * (40 - 25) = 112.35\text{mm}.$$

Then, the electronic device may substitute $thermal_{offset}$ = 112. 35mm into $\text{thermal}_{\text{offset}} = \dfrac{c * t_{\text{temperature}}}{2}$, to obtain a time adjustment amount corresponding to the ambient temperature of the electronic device: $t_{thermal}$.

When the ambient temperature of the electronic device is 40°C, a voltage $Vspad_{meas}$ of the ToF module during current detection is equal to 18300 mv, a voltage value Vspad1 recorded during data calibration is equal to 18000 mv, a level during current detection is $bvd_{current}$ = 18, a level recorded during data calibration is bvd1 = 16, a voltage value $bvd_{lsb}$ changed when a single level is switched is equal to 110 mv, a slope of a voltage fitted line is $ratio_{tof}$ = -0. 08mm/mv. The electronic device may substitute these values into the equation (10), to obtain a depth value adjustment amount corresponding to the voltage of the ToF module during the current detection: $Vspad_{offset}$ = 6. 4mm.

Then, the electronic device may substitute $Vspad_{offset}$ = 6.4mm into $\text{Vspad}_{\text{offset}} = \dfrac{c * t_{\text{vspad}}}{2}$, to obtain a time adjustment amount corresponding to the ambient temperature of the electronic device: $t_{vspad}$.

Finally, the electronic device may obtain a total time adjustment amount: $t_{thermal} + t_{vspad}$.

An example in which the total time adjustment amount is two bins is used. The CPU may shift the original histogram obtained through statistics collection by using the histogram statistics collection module to the left by two bins along the horizontal axis, to obtain a calibrated histogram. Alternatively, the CPU may shift the preset reference signal to the right along a horizontal axis by two bins, to obtain a calibrated reference signal.

With reference to the descriptions of the foregoing embodiments, when the voltage of the ToF module during data calibration is different from the voltage of the ToF module during current detection, an envelope location of a crosstalk signal and an envelope location of a target signal entirely shift on a horizontal axis. After obtaining the time adjustment amount in the foregoing manner, the electronic device may calibrate time of flight based on the time adjustment amount, to calibrate the depth value.

It should be noted that, the foregoing temperature compensation model and voltage compensation model are merely exemplary descriptions, and do not limit this application. During actual implementation, the temperature compensation model and the voltage compensation model may be established in other manners. In addition, the electronic device may set only a temperature compensation model, may set only a voltage compensation model, or may set a temperature compensation model and a voltage compensation model. It should be understood that when the electronic device is provided with the temperature compensation model and the voltage compensation model, the electronic device may separately calibrate the time of flight based on the temperature compensation model and the voltage compensation model.

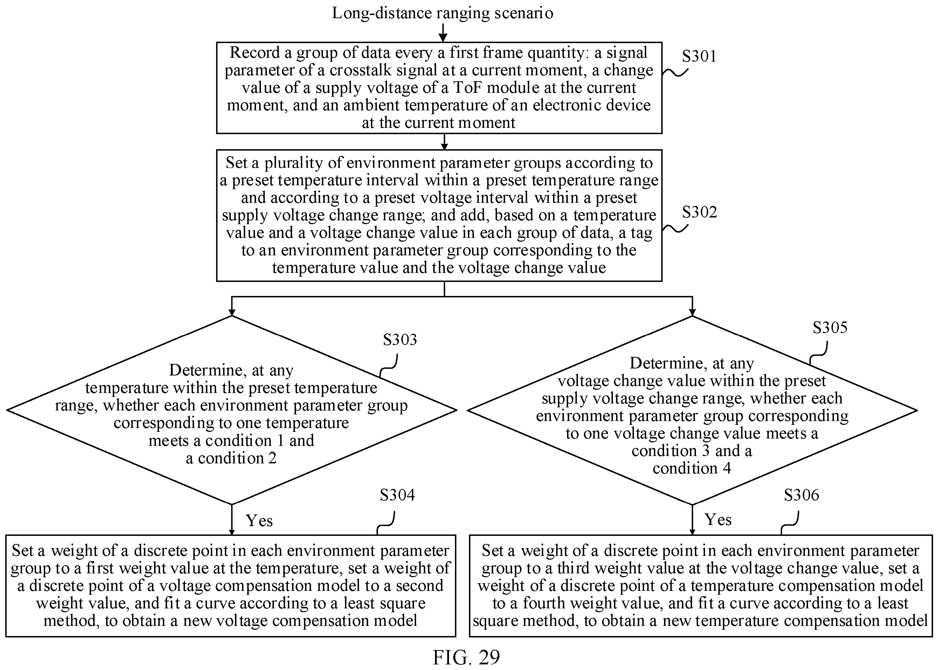

In this embodiment of this application, the temperature compensation model and the voltage compensation model are preconfigured before the electronic device is delivered. Because the temperature compensation model and the voltage compensation model are generated based on a small quantity of ToF modules, the temperature compensation model and the voltage compensation model can reflect only some common features between the ToF modules. Based on an individual difference between the ToF modules, there may be an error in a depth compensation value calculated according to the temperature compensation model and the voltage compensation model. Therefore, as shown in FIG. 29, this application further provides a method for optimizing a temperature compensation model and a voltage compensation model.

For example, as shown in FIG. 29, when a peak meeting the preset condition is not found in the histogram by using S202 (a long-distance ranging scenario), the CPU may further perform the following S301 to S306.

S301: The CPU records a group of data every a first frame quantity (for example, 100 frames).

Each group of data includes: a signal parameter of a crosstalk signal at a current moment, a change value of a voltage (referred to as a voltage change value for short) of the ToF module at the current moment, and an ambient temperature of the electronic device at the current moment. The signal parameter of the crosstalk signal at the current moment may include signal parameters such as an envelope shape of the crosstalk signal at the current moment, an envelope location of the crosstalk signal at the current moment, and strength distribution of the crosstalk signal at the current moment.

S302: The CPU may set a plurality of environment parameter groups according to a preset temperature interval (for example, 2°C) within a preset temperature range (-20°C, 70°C) and according to a preset voltage interval (for example, 10 mv) within a preset voltage change range (-130 mv, 130 mv), where each environment parameter group corresponds to one temperature value and one voltage change value. After recording a group of data each time, the CPU may add, based on a temperature value and a voltage change value in each group of data, a tag (tag) to an environment parameter group corresponding to the temperature value and the voltage change value, and then perform the following S303 and S304. In addition, when adding a tag to one environment parameter group, the CPU determines whether a tag quantity in the environment parameter group is greater than a preset tag quantity (for example, 5). If the tag quantity is greater than the preset tag quantity, the CPU deletes the earliest added tag in the environment parameter group and a group of data corresponding to the tag.

Table 2 shows tags of environment parameter groups collected at a temperature (20°C, 32°C) within a preset voltage change range (-130 mv, 130 mv). For example, a tag quantity in an environment parameter group corresponding to a temperature of 28°C and a voltage change value of -50 mv is 5, representing that the environment parameter group records five groups of data.

**Table 2**

| Temperature<br>Voltage change | 20°C | 22°C | 24°C | 26°C | 28°C | 30° C | 32°C |
|---|---|---|---|---|---|---|---|
| –130 mv | 0 | 0 | 0 | 0 | 0 | 0 | 0 |
| –120 mv | 0 | **1** | 0 | 0 | 0 | 2 | 0 |
| –110 mv | 0 | 0 | 1 | 0 | 0 | 0 | 0 |
| –100 mv | 0 | 0 | 0 | 1 | 0 | 0 | 0 |
| –90 mv | 0 | 0 | 0 | 0 | 0 | 0 | 1 |
| –80 mv | 0 | 0 | 0 | 0 | 0 | 0 | 0 |
| –70 mv | 0 | 0 | 0 | 0 | 1 | 0 | 0 |
| –60 mv | 0 | 0 | 0 | 0 | 0 | 0 | 0 |
| –50 mv | 0 | 0 | 0 | 0 | 5 | 0 | 0 |
| –40 mv | 0 | 0 | 0 | 1 | 0 | 0 | 0 |
| –30 mv | 0 | 0 | 0 | 1 | 0 | 0 | 0 |
| –20 mv | 0 | 0 | 0 | 0 | 0 | 0 | 0 |
| –10 mv | 0 | **1** | 0 | 0 | 1 | 0 | 0 |
| 0 mv | 0 | **2** | 0 | 0 | 0 | 0 | 0 |
| 10 mv | 0 | **0** | 0 | 1 | 0 | 0 | 0 |
| 20 mv | 0 | 0 | 0 | 0 | 0 | 0 | 0 |
| 30 mv | 0 | 0 | 0 | 0 | 0 | 0 | 0 |
| 40 mv | 0 | 0 | 0 | 1 | 0 | 0 | 0 |
| 50 mv | 0 | 0 | 1 | 0 | 0 | 0 | 0 |
| 60 mv | 0 | 0 | 0 | 1 | 0 | 0 | 0 |
| 70 mv | 0 | 0 | 0 | 0 | 0 | 0 | 0 |

| Temperature / Voltage change | 20°C | 22°C | 24°C | 26°C | 28°C | 30° C | 32°C |
|---|---|---|---|---|---|---|---|
| 80 mv | 0 | **1** | 0 | 0 | 0 | 1 | 0 |
| 90 mv | 0 | 0 | 0 | 0 | 0 | 0 | 0 |
| 100 mv | 0 | 0 | 0 | 0 | 0 | 0 | 0 |
| 110 mv | 0 | 0 | 0 | 0 | 0 | 0 | 1 |
| 120 mv | 0 | 0 | 0 | 0 | 0 | 0 | 0 |
| 130 mv | 0 | 0 | 1 | 0 | 0 | 0 | 0 |

S303: The CPU determines, at any temperature within the preset temperature range (-20°C, 70°C), whether each environment parameter group corresponding to one temperature meets the following condition 1 and condition 2.

Condition 1: A voltage difference between a first environment parameter group and a second environment parameter group is greater than or equal to a maximum voltage span value (for example, 70 mv). The first environment parameter group and the second environment parameter group are any two environment parameter groups to which tags have been added at one temperature.

Condition 2: A voltage difference between a third environment parameter group and a fourth environment parameter group is less than or equal to a minimum voltage span value (for example, 20 mv). The third environment parameter group and the fourth environment parameter group are any two environment parameter groups to which tags have been added at one temperature.

With reference to Table 2, at a temperature of 22°C, tags have been added to four environment parameter groups: an environment parameter group corresponding to -120 mv, an environment parameter group corresponding to -10 mv, an environment parameter group corresponding to 0 mv, and an environment parameter group corresponding to 80 mv. Because a voltage span value from the environment parameter group corresponding to -120 mv to the environment parameter group corresponding to 80 mv is 200 mv, which is greater than the maximum voltage span value of 70 mv, it is determined that the condition 1 is met. Because a voltage span value from the environment parameter group corresponding to -10 mv to the environment parameter group corresponding to 0 mv is 10 mv, which is less than the minimum voltage span value of 20 mv, it is determined that the condition 2 is met.

If the condition 1 and the condition 2 are met, the CPU performs S304.

S304: The CPU sets a weight of a discrete point in each environment parameter group to a first weight value (for example, 2) at the temperature, sets a weight of a discrete point of the voltage compensation model to a second weight value (for example, 0.5), and fits a curve according to a least square method, to obtain a new voltage compensation model.

The second weight value is less than the first weight value. The discrete point of the voltage compensation model includes a voltage value and a depth value determined according to a horizontal coordinate location of the crosstalk signal.

S305: The CPU determines, at any voltage change value within the preset voltage change range (-130 mv, 130 mv), whether each environment parameter group corresponding to one voltage change value meets the following condition 3 and condition 4.

Condition 3: A temperature difference between a fifth environment parameter group and a sixth environment parameter group is greater than or equal to a maximum temperature span value (for example, 40°C). The fifth environment parameter group and the sixth environment parameter group are any two environment parameter groups to which tags have been added at one voltage change value.

Condition 4: A temperature difference between a seventh environment parameter group and an eighth environment parameter group is less than or equal to a minimum temperature span value (for example, 4°C). The seventh environment parameter group and the eighth environment parameter group are any two environment parameter groups to which tags have been added at one voltage change value.

If the condition 3 and the condition 4 are met, the CPU performs S306.

S306: The CPU sets a weight of a discrete point in each environment parameter group to a third weight value (for example, 2) at the voltage change value, sets a weight of a discrete point of the temperature compensation model to a fourth weight value (for example, 0.5), and fits a curve according to a least square method, to obtain a new temperature compensation model.

The second weight value is less than the first weight value. The discrete point of the temperature compensation model includes a temperature value and a depth value determined according to a horizontal coordinate location of the crosstalk signal.

In the foregoing embodiments, in a long-distance ranging scenario, an envelope location of a crosstalk signal and an envelope location of a target signal are far apart on a horizontal axis, and peaks of the two signals can be distinguished, the CPU may separate the crosstalk signal from a histogram in the long-distance ranging scenario in an entire use process, and continuously optimize the temperature compensation model and the voltage compensation model based on the crosstalk signal, and an ambient temperature and a voltage that correspond to the crosstalk signal, so that a depth compensation value obtained according to the temperature compensation model and the voltage compensation model is more accurate.

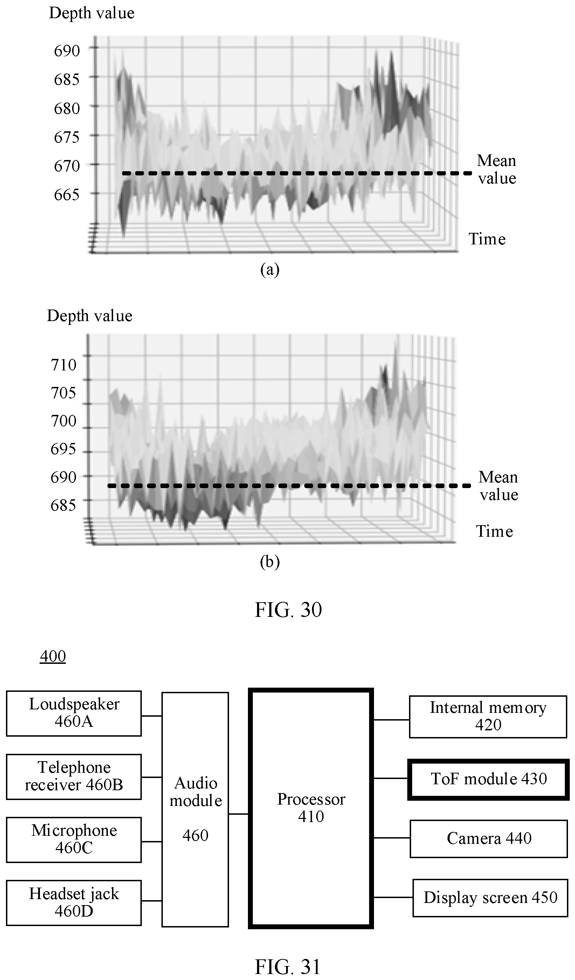

For example, FIG. 30 is a schematic diagram of two depth values under different voltages.

It is assumed that a real distance between the electronic device and the measured object is 700 mm. As shown in (a) in FIG. 30, after the ToF module is assembled to the electronic device, if based on a depth value determining method provided by a ToF module factory, a finally obtained depth value is 670 mm, and a difference between the depth value and the real distance is 30 mm. As shown in (b) in FIG. 30, after the ToF module is assembled to the electronic device, if based on the depth value determining method provided in this application, a finally obtained depth value is 690 mm, and a difference between the depth value and the real distance is 10 mm. It may be understood that because a voltage used by the ToF module factory is different from an actual voltage of the ToF module, a depth value obtained based on the depth value determining method provided by the ToF module factory is not accurate enough. However, when the depth value determining method provided in this application is used, because a temperature compensation model and a voltage compensation model are set, and the temperature compensation model and the voltage compensation model are continuously optimized, a more accurate depth value may be obtained based on the temperature compensation model and the voltage compensation model.

For example, FIG. 31 is a schematic structural diagram of an electronic device according to an embodiment of this application.

As shown in FIG. 31, the electronic device 400 may include: a processor 410, an internal memory interface 420, a ToF module 430, a camera 440, a display screen 450, an audio module 460, a loudspeaker 460A, a telephone receiver 460B, a microphone 460C, a headset jack 460D, and the like.

The processor 410 may be configured to perform the depth value determining method in the foregoing embodiments. The processor 410 may include one or more processing units. For example, the processor 410 may include a central processing unit (central processing unit, CPU), a graphics processing unit (graphics processing unit, GPU), an application processor (application processor, AP), and an image signal processor (image signal processor, ISP).

The internal memory 420 may be configured to store computer-executable program code, and the executable program code includes instructions. The processor 410 runs the instruction stored in the internal memory 420, to perform various function applications and data processing of the electronic device 400. The internal memory 420 may include a program storage region and a data storage region. The program storage region may store an operating system and an application (application, APP), for example, a camera application and a gallery application, required by at least one function. The data storage region may store a configuration file of each APP.

The ToF module 430 may be configured to measure a distance between the electronic device and a measured object, that is, a depth value. In some embodiments, the electronic device 400 may include one or more ToF modules 430.

The camera 440 may be configured to move, based on the depth value obtained by the ToF module 430, forward or backward by a distance corresponding to the depth value, to achieve a photographing effect such as focusing on a close view and blurring a distant view. In some embodiments, the electronic device 400 may include one or more cameras 440.

The display screen 450 may include a display panel and may be configured to display a picture or a video shot by the camera 440.

In addition, the electronic device 400 may implement an audio function by using the audio module 460, the loudspeaker 460A, the telephone receiver 460B, the microphone 460C, the headset jack 460D, and the like, for example, audio.

An embodiment of this application further provides a computer-readable storage medium. The computer-readable storage medium stores computer instructions. When the computer-readable storage medium runs on an electronic device, the electronic device is enabled to perform the method in the foregoing embodiments. The computer instructions may be stored in a computer-readable storage medium, or transmitted from one computer-readable storage medium to another computer-readable storage medium. The computer-readable storage medium may be any available medium that a computer can access or a data storage device such as a server or a data center that includes one or more integrated available media. The usable medium may be a magnetic medium, an optical medium, a semiconductor medium, or the like.

An embodiment of this application further provides a computer program product. The computer program product includes computer program code, and when the computer program code is run on an electronic device, the electronic device is enabled to perform the method in the foregoing embodiments.

An embodiment of this application further provides a chip system. The chip system is used in an electronic device. The chip system includes one or more processors, and the one or more processors are configured to invoke computer instructions, to enable the electronic device to perform the method in the foregoing embodiments.

The electronic device, the computer-readable storage medium, the computer program product, and the chip system provided in the embodiments of this application are all configured to perform the method provided in the foregoing embodiments. Therefore, for beneficial effects achieved by the computer storage medium, the computer program product, and the chip provided in embodiments of this application, refer to beneficial effects corresponding to the method provided above. Details are not described herein again.

In descriptions of this application, "/" means "or". For example, A/B may indicate A or B. In the descriptions of embodiments of this application, "and/or" is merely used to describe an association relationship between associated objects, and represents that three relationships may exist. For example, A and/or B may represent the following three cases: Only A exists, both A and B exist, and only B exists.

In the specification and the claims of this application, the terms "first", "second", and the like are intended to distinguish between different objects or distinguish between different processing on a same object, but do not indicate a particular order among the objects. For example, a first operation, a second operation, and the like are intended to distinguish between different operations, but do not indicate a particular order of the operations. In embodiments of this application, "a plurality of" means at least two.

The foregoing descriptions about implementation manners allow a person skilled in the art to understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or part of the functions described above. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The foregoing content is merely specific implementations of this application, but is not intended to limit the protection scope of this application. Any variation or replacement within the technical scope disclosed in this application shall fall within the protection scope of this application. Therefore, the protection scope of the present application shall be subject to the protection scope of the claims.

**Claims**

1. A depth value determining method, applicable to an electronic device, wherein a depth detection module is arranged below a cover plate of the electronic device, and the depth detection module comprises a transmit end and a receive end; and the method comprises:

   receiving, by the electronic device, a pulse signal through the receive end, wherein the pulse signal comprises a first crosstalk signal and a target signal, the first crosstalk signal is a signal that is transmitted by the transmit end and reflected back by the cover plate, and the target signal is a signal that is transmitted by the transmit end and reflected back by a measured object; and
   determining, by the electronic device, a depth value of the measured object based on received time of a second crosstalk signal and received time of the target signal, wherein the second crosstalk signal is the first crosstalk signal, or the second crosstalk signal is a preset crosstalk signal.

2. The method according to claim 1, wherein before the determining, by the electronic device, a depth value of the measured object based on received time of a second crosstalk signal and received time of the target signal, the method further comprises:
   separating, by the electronic device, the target signal from the pulse signal based on the second crosstalk signal.

3. The method according to claim 2, wherein the separating, by the electronic device, the target signal from the pulse signal based on the second crosstalk signal comprises:

   generating, by the electronic device, a first histogram based on the pulse signal, wherein a horizontal axis of the first histogram represents received time of the pulse signal, and a vertical axis of the first histogram represents a signal strength of the pulse signal; and
   if a peak meeting a preset condition is found within a preset peak finding range of the first histogram, separating, by the electronic device, the target signal from the first histogram based on the preset crosstalk signal; or

if a peak meeting the preset condition is not found within a preset peak finding range of the first histogram, separately determining, by the electronic device, the first crosstalk signal and the target signal in the first histogram, wherein received time of the first crosstalk signal is earlier than the received time of the target signal, and

the preset peak finding range is determined according to a peak location of the preset crosstalk signal.

4. The method according to claim 2, wherein the separating, by the electronic device, the target signal from the pulse signal based on the second crosstalk signal comprises:

generating, by the electronic device, a first histogram based on the pulse signal, wherein a horizontal axis of the first histogram represents received time of the pulse signal, and a vertical axis of the first histogram represents a signal strength of the pulse signal;

adjusting, by the electronic device, the received time of the pulse signal in the first histogram based on an ambient temperature of the electronic device and a voltage of the depth detection module, to obtain a second histogram; and

if a peak meeting a preset condition is found within a preset peak finding range of the second histogram, separating, by the electronic device, the target signal from the second histogram based on the preset crosstalk signal; or

if a peak meeting the preset condition is not found within a preset peak finding range of the second histogram, separately determining, by the electronic device, the first crosstalk signal and the target signal in the first histogram, wherein received time of the first crosstalk signal is earlier than the received time of the target signal, and

the preset peak finding range is determined according to a peak location of the preset crosstalk signal.

5. The method according to claim 2, wherein the separating, by the electronic device, the target signal from the pulse signal based on the second crosstalk signal comprises:

generating, by the electronic device, a first histogram based on the pulse signal, wherein a horizontal axis of the first histogram represents received time of the pulse signal, and a vertical axis of the first histogram represents a signal strength of the pulse signal;

adjusting, by the electronic device, received time of the preset crosstalk signal based on an ambient temperature of the electronic device and a voltage of the depth detection module; and

if a peak meeting a preset condition is found within a preset peak finding range of the first histogram, separating, by the electronic device, the target signal from the first histogram based on the adjusted preset crosstalk signal; or

if a peak meeting the preset condition is not found within a preset peak finding range of the first histogram, separately determining, by the electronic device, the first crosstalk signal and the target signal in the first histogram, wherein received time of the first crosstalk signal is earlier than the received time of the target signal, and

the preset peak finding range is determined according to a peak location of the adjusted preset crosstalk signal.

6. The method according to any one of claims 3 to 5, wherein the preset condition comprises:

a signal strength of a found peak is greater than a strength of background noise; and

the signal strength of the found peak is greater than N times a signal strength of the preset crosstalk signal.

7. The method according to claim 4, wherein the adjusting, by the electronic device, the received time of the pulse signal in the first histogram comprises:
shifting, by the electronic device, a signal envelope of the pulse signal by a target adjustment amount in a first direction of the horizontal axis.

8. The method according to claim 5, wherein the adjusting, by the electronic device, received time of the preset crosstalk signal comprises:
shifting, by the electronic device, a signal envelope of the preset crosstalk signal by a target adjustment amount in a second direction of the horizontal axis.

9. The method according to claim 7 or 8, wherein the method further comprises:

obtaining, by the electronic device, the ambient temperature of the electronic device and the voltage of the depth detection module;

obtaining, by the electronic device, a first time adjustment amount based on the ambient temperature of the electronic device and a temperature compensation model;

obtaining, by the electronic device, a second time adjustment amount based on the voltage of the depth detection module and a voltage compensation model; and

using, by the electronic device, a sum of the first time adjustment amount and the second time adjustment amount as the target adjustment amount, wherein

the temperature compensation model is generated according to a plurality of first depth values, and the plurality of first depth values are depth values obtained by changing the ambient temperature under a preset voltage; and the voltage compensation model is generated according to a plurality of second depth values, and the plurality of second depth values are depth values obtained by changing the voltage of the depth detection module at a preset temperature.

10. The method according to claim 9, wherein the method further comprises:

storing, by the electronic device, a group of data when a signal strength of a found peak does not meet the preset condition, wherein the group of data comprises: the ambient temperature of the electronic device, the voltage of the depth detection module, and a signal parameter of the first crosstalk signal; and

updating, by the electronic device, the temperature compensation model or the voltage compensation model when a plurality of groups of data stored in the electronic device meet an update condition.

11. The method according to any one of claims 1 to 10, wherein the second crosstalk signal is the first crosstalk signal; and the determining, by the electronic device, a depth value of the measured object based on received time of a second crosstalk signal and received time of the target signal comprises:

subtracting, by the electronic device, the received time of the first crosstalk signal from the received time of the target signal, to obtain first time of flight; and determining the depth value of the measured object based on the first time of flight.

12. The method according to any one of claims 1 to 10, wherein the second crosstalk signal is the preset crosstalk signal; and the determining, by the electronic device, a depth value of the measured object based on received time of a second crosstalk signal and received time of the target signal comprises:

subtracting, by the electronic device, the received time of the preset crosstalk signal from the received time of the target signal, to obtain second time of flight; and determining the depth value of the measured object based on the second time of flight.

13. The method according to any one of claims 1 to 12, wherein the receive end comprises a plurality of pixels; and the determining, by the electronic device, a depth value of the measured object based on received time of a second crosstalk signal and received time of the target signal comprises:

determining, by the electronic device, the received time of the preset crosstalk signal corresponding to a first pixel and the received time of the target signal corresponding to the first pixel, wherein the first pixel is any one of the plurality of pixels; and

determining, by the electronic device, a depth value corresponding to the first pixel based on the received time of the preset crosstalk signal corresponding to the first pixel and the received time of the target signal corresponding to the first pixel.

14. The method according to claim 13, wherein the determining, by the electronic device, the received time of the preset crosstalk signal corresponding to a first pixel comprises:

determining, by the electronic device, the received time of the preset crosstalk signal corresponding to the first pixel based on an envelope shape of a crosstalk signal of one pixel, strength distribution of the preset crosstalk signal corresponding to the first pixel, and an envelope location of the preset crosstalk signal corresponding to the first pixel, wherein

the envelope shape of the crosstalk signal of the pixel, the strength distribution of the preset crosstalk signal corresponding to the first pixel, and the envelope location of the preset crosstalk signal corresponding to the first pixel are data prestored in the electronic device.

15. An electronic device, comprising a cover plate, and a depth detection module arranged below the cover plate, wherein the depth detection module comprises a transmit end and a receive end;

the transmit end is configured to transmit a pulse signal; the receive end is configured to receive the pulse signal reflected back by a measured object and the cover plate; a processor is configured to invoke instructions, to enable the electronic device to perform the depth value determining method according to any one of claims 1 to 12; and the processor is a main processor connected to the depth detection module in the electronic device, or the processor is a digital signal processor in the depth detection module.

16. The electronic device according to claim 15, wherein the transmit end comprises a pulse laser and a light scattering element, the pulse laser is configured to transmit the pulse signal, and the light scattering element is configured to perform scattering processing on the pulse signal.

17. The electronic device according to claim 15, wherein the receive end comprises a light detection element, a pulse response filter, and an optical receiver, the light detection element is configured to converge received light, the pulse response filter is configured to filter converged light, and the optical receiver is configured to convert filtered light into the pulse signal.

18. The electronic device according to claim 17, wherein the optical receiver is a planar matrix device comprising a plurality of single-photo avalanche diode sensors.

19. The electronic device according to any one of claims 15 to 18, wherein a subtended angle at which the transmit end emits a light beam is 70°, a subtended angle at which the receive end receives a light beam is 70°, a thickness of the depth detection module in an optical axis direction is 2.48 mm, a distance between an upper surface of the depth detection module and a lower surface of the cover plate is 0.8 mm, and a distance between a geometric center of the transmit end and a geometric center of the receive end is 4 mm.

20. A chip system, used in an electronic device, wherein the chip system comprises one or more processors, and the one or more processors are configured to invoke computer instructions to enable the electronic device to perform the method according to any one of claims 1 to 14.

21. A computer-readable storage medium, storing a computer program, wherein when the computer program is run on an electronic device, the electronic device is enabled to perform the depth value determining method according to any one of claims 1 to 14.

FIG. 1

FIG. 2

Depth value

(a)

Interference region

Interference region

Depth value

Interference region

(b)

FIG. 3

t1

Ball

Person 1

Moving track

t2

t3

Photographing
viewing angle

Mobile
phone 1

Photograph a scene

FIG. 4A

TO
FIG.
4C

Image captured by using the mobile phone 1
at a moment t1

FIG. 4B

CONT.
FROM
FIG. 4B

TO
FIG.
4D

Aperture  Night  Portrait  Photo  Video  Professional  More
scene  taking  recording

Image captured by using the mobile phone 1
at a moment t2

FIG. 4C

Aperture  Night   Portrait  Photo    Video     Professional  More
          scene            taking  recording

Image captured by using the mobile phone 1
at a moment t3

FIG. 4D

Slide a finger upward

FIG. 5A

Tap a focus priority option

FIG. 5B

Select a motion priority focus option

FIG. 5C

Perform focus tracking on a moving object frame by frame

FIG. 5D

Perform focus tracking on a moving object frame by frame

FIG. 5E

Perform focus tracking on a moving object frame by frame

FIG. 5F

FIG. 6

FIG. 7

Measured object

171

18

8 mm

13

172

12

18

11

16

14

15

FIG. 8

Measured object

171

0.8 mm

4 mm

13

172

2.48 mm

12

11

16

14

15

FIG. 9

FIG. 10

Measured
object

Glass cover
plate

Surface
light source

α

Receive end
planar matrix
device

β

FIG. 11

ToF module

Controller 10

Synchronous
driving 10-1

Histogram
statistics
collection 10-3

DSP
10-4

TDC
10-2

Pulse laser 11

Light scattering
element 12

Optical receiver
15 (SPAD)

Pulse response
filter 14

Light
detection
element 13

CPU

Glass cover
plate

Measured
object

FIG. 12

FIG. 13

FIG. 14

FIG. 15

$$D1=c*t1/2 \quad D=D1-D2=c*\Delta t/2$$

$$D2=c*t2/2$$

171

172

13

12

11

15

Depth value calculation

Crosstalk signal

Target signal

Perform statistics collection to obtain a histogram

t2

$\Delta t$

t1

Zero-distance point before calibration

Zero-distance point after calibration

Time (unit: bin)

FIG. 16

(a) Long-distance
ranging histogram

(b) Short-distance
ranging histogram

FIG. 17

Read calibration data of a preset reference
signal from a memory — S201

↓

Search, based
on a peak finding range of
a first pixel, a histogram for whether
a peak meeting a preset
condition exists — S202

No
(long distance) ← → Yes
(short distance)

S203 — Separately determine a
signal parameter of a
crosstalk signal and a signal
parameter of a target signal
in the histogram

S205 — Separate the target signal from the
histogram based on the preset
reference signal corresponding to
the first pixel

↓

S204 — Calculate a depth value
based on received time of
the crosstalk signal and
received time of the target
signal

S206 — Calculate a depth value based on
received time of the preset
reference signal corresponding to
the first pixel and the received time
of the target signal

FIG. 18

(a) Preset reference signal

(b) First histogram

(c) Determine a peak finding range of a 6th bin to a 19th bin in the first histogram based on a peak of the preset reference signal

(d) Find a peak within the peak finding range of the 6th bin to the 19th bin

FIG. 19

FIG. 20

FIG. 21

Light intensity

400
300
200
100
0

$\Delta t=(Kpeak1-Kpeak2)*q$

Crosstalk signal

Target signal

0

5    13              52   60

Time (unit: bin)

Separate                    Separate

Light intensity

Crosstalk signal

400
300
200
100
0

0

5 │ 13

Kpeak2

Time (unit: bin)

Histogram corresponding to the crosstalk signal

Light intensity

Target signal

400
300
200
100
0

0

52 │ 60

Kpeak1

Time (unit: bin)

Histogram corresponding to the target signal

FIG. 22

FIG. 23

(a) Original histogram

(b) Histogram of a preset reference signal

(c) Separate a target signal from the original histogram based on the preset reference signal

(d) Calculate a depth value by using the preset reference signal as a zero-distance point

FIG. 24

(a) Calibrate the original histogram

(b) Histogram of a preset reference signal

(c) Separate a target signal from the calibrated histogram based on the preset reference signal

(d) Calculate a depth value by using the preset reference signal as a zero-distance point

FIG. 25

(a) Original histogram

(b) Calibrate the preset reference signal based on a complementary model

(c) Separate a target signal from the original histogram based on the moved preset reference signal

(d) Calculate a depth value by using the moved preset reference signal as a zero-distance point

FIG. 26

First fitted line

Second fitted line

FIG. 27

FIG. 28

Long-distance ranging scenario

Record a group of data every a first frame quantity: a signal parameter of a crosstalk signal at a current moment, a change value of a supply voltage of a ToF module at the current moment, and an ambient temperature of an electronic device at the current moment — S301

Set a plurality of environment parameter groups according to a preset temperature interval within a preset temperature range and according to a preset voltage interval within a preset supply voltage change range; and add, based on a temperature value and a voltage change value in each group of data, a tag to an environment parameter group corresponding to the temperature value and the voltage change value — S302

Determine, at any temperature within the preset temperature range, whether each environment parameter group corresponding to one temperature meets a condition 1 and a condition 2 — S303

Determine, at any voltage change value within the preset supply voltage change range, whether each environment parameter group corresponding to one voltage change value meets a condition 3 and a condition 4 — S305

Yes — S304

Set a weight of a discrete point in each environment parameter group to a first weight value at the temperature, set a weight of a discrete point of a voltage compensation model to a second weight value, and fit a curve according to a least square method, to obtain a new voltage compensation model

Yes — S306

Set a weight of a discrete point in each environment parameter group to a third weight value at the voltage change value, set a weight of a discrete point of a temperature compensation model to a fourth weight value, and fit a curve according to a least square method, to obtain a new temperature compensation model

FIG. 29

EP 4 756 494 A1

Depth value

(a)

Depth value

(b)

FIG. 30

<u>400</u>

FIG. 31

## INTERNATIONAL SEARCH REPORT

| International application No. |
|---|
| **PCT/CN2024/071092** |

**A.    CLASSIFICATION OF SUBJECT MATTER**

G01S17/10(2020.01)i

According to International Patent Classification (IPC) or to both national classification and IPC

**B.    FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 荣耀, 华为, 中兴, 高通, 深度, 距离, 远, 近, 摄像, 屏下, 聚焦, 串扰, 盖板, 玻璃板, 直方图, 波峰, 范围, 时间, 区间, depth, distance, far, near, imaging, underscreen, focus, crosstalk, cover, glass, histogram, peak, range, time, interval

**C.    DOCUMENTS CONSIDERED TO BE RELEVANT**

| Category* | Citation of document, with indication, where appropriate, of the relevant passages | Relevant to claim No. |
|---|---|---|
| X | CN 111133329 A (AMS AG) 08 May 2020 (2020-05-08) <br> description, paragraphs [0002]-[0143], and figures 1-5B | 1-21 |
| A | CN 112255636 A (AOCHENG INFORMATION TECHNOLOGY (SHANGHAI) CO., LTD.) 22 January 2021 (2021-01-22) <br> entire document | 1-21 |
| A | CN 114745481 A (JIANGXI OMS MICROELECTRONICS CO., LTD.) 12 July 2022 (2022-07-12) <br> entire document | 1-21 |
| A | US 2019235049 A1 (MOTOROLA MOBILITY LLC) 01 August 2019 (2019-08-01) <br> entire document | 1-21 |
| A | US 2020088875 A1 (SHARP K.K.) 19 March 2020 (2020-03-19) <br> entire document | 1-21 |
| A | US 2021033711 A1 (INFINEON TECHNOLOGIES AG) 04 February 2021 (2021-02-04) <br> entire document | 1-21 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2024** | **12 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/071092**

| C. | DOCUMENTS CONSIDERED TO BE RELEVANT | |
|---|---|---|
| Category* | Citation of document, with indication, where appropriate, of the relevant passages | Relevant to claim No. |
| A | US 2022187431 A1 (STMICROELECTRONICS (RESEARCH & DEVELOPMENT) LTD.) 16 June 2022 (2022-06-16) entire document | 1-21 |

Form PCT/ISA/210 (second sheet) (July 2022)

**INTERNATIONAL SEARCH REPORT**
Information on patent family members

International application No.

**PCT/CN2024/071092**

| Patent document cited in search report | | | Publication date (day/month/year) | Patent family member(s) | | | Publication date (day/month/year) |
|---|---|---|---|---|---|---|---|
| CN | 111133329 | A | 08 May 2020 | US | 2020271765 | A1 | 27 August 2020 |
| | | | | JP | 2021501874 | A | 21 January 2021 |
| | | | | JP | 6960529 | B2 | 05 November 2021 |
| | | | | KR | 20200037382 | A | 08 April 2020 |
| | | | | KR | 102342944 | B1 | 27 December 2021 |
| | | | | WO | 2019057897 | A1 | 28 March 2019 |
| | | | | EP | 3460509 | A1 | 27 March 2019 |
| CN | 112255636 | A | 22 January 2021 | None | | | |
| CN | 114745481 | A | 12 July 2022 | None | | | |
| US | 2019235049 | A1 | 01 August 2019 | US | 10884101 | B2 | 05 January 2021 |
| US | 2020088875 | A1 | 19 March 2020 | US | 11415696 | B2 | 16 August 2022 |
| | | | | WO | 2018211801 | A1 | 22 November 2018 |
| | | | | JPWO | 2018211801 | A1 | 27 February 2020 |
| | | | | JP | 6788737 | B2 | 25 November 2020 |
| US | 2021033711 | A1 | 04 February 2021 | US | 11592537 | B2 | 28 February 2023 |
| US | 2022187431 | A1 | 16 June 2022 | US | 11808895 | B2 | 07 November 2023 |

Form PCT/ISA/210 (patent family annex) (July 2022)